(19) Europäisches Patentamt
European Patent Office
Office européen des brevets

(11) **EP 4 765 003 A1**

(12) **EUROPEAN PATENT APPLICATION**
published in accordance with Art. 153(4) EPC

(43) Date of publication:
**24.06.2026 Bulletin 2026/26**

(21) Application number: **24856115.1**

(22) Date of filing: **14.06.2024**

(51) International Patent Classification (IPC):
**G06Q 50/10** (2012.01)    **G06F 3/01** (2006.01)

(52) Cooperative Patent Classification (CPC):
**G06F 3/01; G06Q 50/10**

(86) International application number:
**PCT/JP2024/021784**

(87) International publication number:
**WO 2025/041420 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023 JP 2023133566**

(71) Applicant: **CYBERDYNE INC.
Tsukuba-shi, Ibaraki 305-0818 (JP)**

(72) Inventor: **SANKAI, Yoshiyuki
Tsukuba-shi, Ibaraki 305-0818 (JP)**

(74) Representative: **Hoefer & Partner Patentanwälte
mbB
Pilgersheimer Straße 20
81543 München (DE)**

(54) **SPACE SHARING SYSTEM AND SPACE SHARING METHOD**

(57)    After acquiring human and environment information including brain and nervous system information, muscular and skeletal system information, physiological information, psychological information, motion information, behavior information, and environment information of a subject in a real space, human activities of the subject in the real space are virtually constructed in an information space in real time based on the acquired human and environment information of the subject, and human characteristic information specific to the subject is created by analyzing the human activities of the subject constructed in the information space.

FIG. 1

1 SPACE SHARING SYSTEM

## Description

Technical Field

The present invention relates to a space sharing system and a space sharing method, and is suitably applied, for example, to an extended space including a three-dimensional virtual space constructed on a network and a real space.

Background Art

In recent years, the term "metaverse" has been widely used to describe a fully immersive three-dimensional virtual space including a virtual environment in which humans are represented by avatars (characters serving as alter egos of users).

As such a metaverse, for example, there is a virtual space experience system that allows a user to perceive images of a three-dimensional virtual space constructed on a network, while reflecting human activities of the user in a real space into the virtual space and making the user feel that the user themself is present in the virtual space.

As this type of virtual space experience system, there has been proposed a system that recognizes changes in a state of a user in a real space (for example, body movements, movement of coordinates, changes in posture, etc.) by a motion capture device, and changes a state of an avatar in the virtual space in accordance with the recognized changes in state (see Patent Literature 1).

However, since this virtual space experience system merely allows a user to control an avatar existing in the virtual space, there has been proposed an interface system in which a virtual space is interposed as an interface between two real spaces, a second avatar is operated via operations of a first avatar corresponding to the user in the virtual space, and operations of a control target such as a robot corresponding to the second avatar are controlled in a real space in which at least one of time and position differs from the real space in which the user is present (see Patent Literature 2).

Citation List

Patent Literature

Patent Literature 1: Japanese Patent Laid-Open No. 2018-49629
Patent Literature 2: Japanese Patent No. 6933849

Summary of Invention

Technical Problem

In such an interface system of Patent Literature 2, the user can control the action of a control target in a different region in real space than the region where the user is present through the virtual space, in line with the different region without considering the constraints in the different region.

However, this interface system merely allows a user to relatively freely control the operation of a controlled object existing at a remote location via a virtual space, and is practically insufficient in terms of performing support activities for a person at the remote location or cooperative activities with a person while reflecting information relating to the user as a human and information relating to the environment.

The present invention was made in consideration of the above points, and attempts to propose a space sharing system and a space sharing method that can directly express the subject's personality when the subject performs support activities for people or cooperative activities with people at a location different from the subject's current location.

Solution to Problem

In order to solve such problems, the present invention includes a human and environment information input/output unit that acquires human and environment information including brain and nervous system information, muscular and skeletal system information, physiological information, psychological information, action information, behavior information, and environment information of a subject present in a real space, a virtual activity construction unit that virtually constructs human activity of the subject in the real space in the information space in real time based on the subject's human and environment information output from the human and environment information input/output unit, and an information generation unit that generates human characteristic information specific to the subject while analyzing human activities of the subject that are constructed in the information space by the virtual activity construction unit.

As a result, the space sharing system can virtually construct the subject's human activities in the information space based on the subject's human and environment information, and create human characteristic information specific to the subject from the analysis results of the human activities, so that when the subject engages in support activities for people or cooperative activities with people at a location different from his/her current location, he/she can reflect the human characteristic information specific to him/her into the content of his/her activities.

Also, the present invention includes an activity transcription unit that, when receiving a request to connect with the subject from an external output apparatus, transcribes all or part of the subject's human activity constructed in the information space by the virtual activity construction unit according to an output form of the output apparatus, and the activity transcription unit reflects the human characteristic information specific to the subject generated by the information generation unit into an output operation by the output apparatus.

In this way, when the subject is connected to the external output apparatus, the space sharing system transcribes all or part of the subject's human activities according to the output form of the output apparatus, and reflects the human characteristic information specific to the subject also into the output operation of the output apparatus, thereby enabling the output apparatus to directly express the subject's personality.

The present invention further includes an activity state transmission unit that transmits a state of operation by the output apparatus to the subject in the real space in real time via the information space as feedback.

As a result, the space sharing system enables the subject to share human physical sensations through the output apparatus from interactions related to the content of the subject's activities when operating with the output apparatus.

Furthermore, in the present invention, the activity state transmission unit includes a sensory estimation unit that estimates human physical sensations and psychological sensations, during operation of the output apparatus, based on an effect result related to an operation content of the output apparatus and a sensing result of an environmental state in which the output apparatus is present, a sensory feedback generation unit that generates the physical sensations and psychological sensations estimated by the sensory estimation unit as feedback information, and a sensory transmission unit that transmits the feedback information generated by the sensory feedback generation unit to the subject in the real space.

As a result, when operating with the output apparatus, the space sharing system enables the subject to share human physical sensations and psychological sensations resulting from interactions related to the content of the subject's activities through the output apparatus.

The present invention further includes an estimation model construction unit that constructs an estimation model trained to estimate a function having a characteristic unique to the subject by statistically analyzing a correlation of the subject's human and environment information with the subject's activity result transcribed to the output apparatus, and an autonomous avatar generation unit that generates an autonomous avatar capable of self-expression including a function of the subject in the information space based on the estimation model estimated by the estimation model construction unit, wherein the virtual activity construction unit virtually constructs human activities of a substitute in place of the subject in the real space in the information space while reflecting self-expression of the autonomous avatar, and the information generation unit generates human characteristic information specific to the substitute while analyzing the human activities of the substitute expressed as the autonomous avatar constructed in the information space by the virtual activity construction unit.

As a result, the space sharing system can reflect the same presence as the subject in real space as an autonomous avatar from the cloud through the information space when a substitute, different from the subject in real space, acts in place of the subject.

The present invention further includes a personality trait inference unit that infers a personality trait related to the subject's self-expression from a result of an operation by the output apparatus, wherein when the acquisition of the subject's human and environment information by the human and environment information input/output unit is stopped for a predetermined period of time, the virtual activity construction unit reflects a personality trait that is a result of inference by the personality trait inference unit into the self-expression of the autonomous avatar.

As a result, even when the subject in the real space has died, the space sharing system can reflect the same presence as the subject as an autonomous avatar from the cloud through the information space.

Furthermore, the present invention includes a first step of acquiring human and environment information including brain and nervous system information, muscular and skeletal system information, physiological information, psychological information, action information, behavior information, and environment information of a subject present in a real space, a second step of virtually constructing human activity of the subject in the real space in the information space in real time based on the subject's human and environment information acquired in the first step, and a third step of generating human characteristic information specific to the subject while analyzing human activities of the subject that are constructed in the information space by the second step.

As a result, the space sharing method can virtually construct the subject's human activities in the information space based on the subject's human and environment information, and create human characteristic information specific to the subject from the analysis results of the human activities, so that when the subject engages in support activities for people or cooperative activities with people at a remote location, he/she can reflect the human characteristic information specific to him/her into the content of his/her activities.

Advantageous Effects of Invention

According to the present invention, there can be provided a space sharing system and a space sharing method that can directly express the subject's personality when the subject performs support activities for people or cooperative activities with people at a location different from the subject's current location.

Brief Description of Drawings

[Figure 1] Figure 1 is a conceptual diagram for explaining a space sharing system according to an embodiment.
[Figure 2] Figure 2 is a conceptual diagram showing an internal configuration of a first interface device shown in Figure 1.
[Figure 3] Figure 3 is a conceptual diagram for explaining a body fluid system model.
[Figure 4] Figure 4 is a conceptual diagram for explaining a virtual human body model.
[Figure 5] Figure 5 is a perspective view and a six-sided view showing an external configuration of a vital sign measurement apparatus.
[Figure 6] Figure 6 is a conceptual diagram illustrating a configuration of a brain activity measurement unit.
[Figure 7] Figure 7 is a conceptual diagram illustrating a configuration of a biological signal measurement wearing device.
[Figure 8] Figure 8 is a conceptual diagram for explaining a worn state of the biological signal measurement wearing device.
[Figure 9] Figure 9 is a conceptual diagram illustrating an additional configuration of the vital sign measurement apparatus.
[Figure 10] Figure 10 is a graph showing pulse waveforms before and after filter application.
[Figure 11] Figure 11 is a conceptual diagram representing an ROI of a near-infrared image and an ROI of a far-infrared image.
[Figure 12] Figure 12 is a conceptual diagram for explaining nasal breathing and mouth breathing.
[Figure 13] Figure 13 is a conceptual diagram for explaining temperature states of nasal breathing and mouth breathing.
[Figure 14] Figure 14 is a graph representing changes in nasal temperature due to nasal breathing and changes in oral temperature due to mouth breathing.
[Figure 15] Figure 15 is a graph in which a change in breathing method from nasal breathing to mouth breathing and state information of each state are superimposed.
[Figure 16] Figure 16 is a conceptual diagram for explaining non-contact measurement of oxygen saturation using light.
[Figure 17] Figure 17 is a block diagram illustrating an internal configuration of a motion capture device.
[Figure 18] Figure 18 isa conceptual diagram for explaining a method for acquiring three-dimensional skeletal information of a whole body of a subject.
[Figure 19] Figure 19 is a conceptual diagram representing a structure of a behavior recognition model.
[Figure 20] Figure 20 is a conceptual diagram mainly showing an internal configuration of a second interface device shown in Figure 1.
[Figure 21] Figure 21 is a conceptual diagram illustrating specific examples of output forms of output apparatuses.
[Figure 22] Figure 22 is a conceptual diagram of an internal structure of a sensory estimation unit and a structure of a load sensor or the like.
[Figure 23] Figure 23 is a conceptual diagram showing an additional configuration added to the second interface device shown in Figure 20.

Description of Embodiments

Embodiments of the present invention are described in detail below with reference to drawings.

(1) Configuration of Space Sharing System According to Present Embodiment

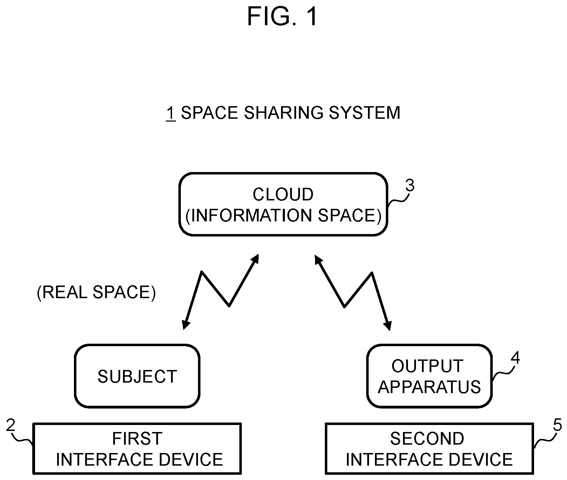

Figure 1 shows a space sharing system 1 according to an embodiment. The space sharing system 1 has a first interface device 2 that acquires various kinds of information obtained from a subject himself/herself and the surrounding environment present in the real space and reflects the various kinds of information transmitted from the first interface device 2 into an information space constructed in a cloud (information space) 3.

In this space sharing system 1, when an external output apparatus 4 is provided in a real space together with a corresponding second interface device 5 for the purpose of transcribing all or part of human activities of a subject, the system is configured such that the output apparatus 4 can be connected from a first interface device 2 corresponding to the subject via a cloud (information space) 3 through the second interface device 5.

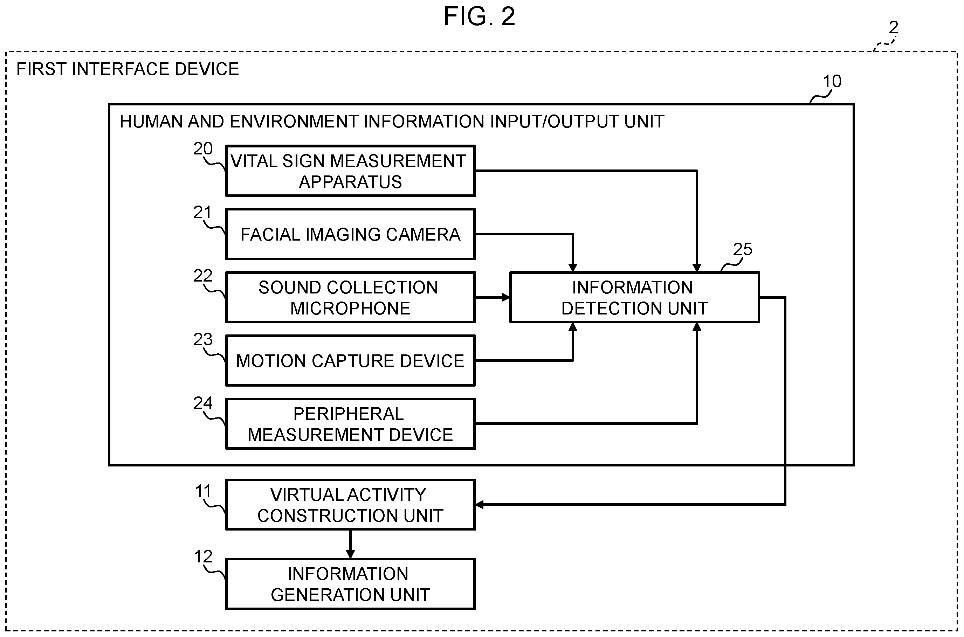

As shown in Figure 2, the first interface device 2 includes a human and environment information input/output unit 10, a virtual activity construction unit 11, and an information generation unit 12. The human and environment information input/output unit 10 has vital sign measurement apparatuses 20 (means for measuring electrocardiogram, pulse rate, pulse pressure, oxygen saturation, body temperature, EEG, blood sugar, blood pressure, myoelectricity, etc.), a facial imaging camera 21, a sound collection microphone 22, a motion capture device 23 (optical, inertial sensor-based, mechanical, magnetic, or a combination thereof), and peripheral measurement devices 24 (thermometers, hygrometers, and surrounding sound collectors for audible sound and ultrasonic sound, etc.), and an information detection unit 25 that detects human and environment information based on the output of these sensor groups and devices, as described below.

In this human and environment information input/output unit 10, the information detection unit 25 detects the subject's brain and nervous system information, muscular and skeletal system information, and physiological information based on the detection results by the vital sign measurement apparatuses 20, as well as psychological information by analyzing the subject's facial expression and voice using the facial imaging camera 21 and sound collection microphone 22. In addition, the motion capture device 23 detects the subject's action information and behavior information, and the peripheral measurement device 24 detects the subject's surrounding environment information.

It should be noted that, in addition to the various configurations of the human and environment information input/output unit 10, the first interface device 2 is configured not only to acquire various kinds of information from the subject, but also to make the subject wearing a head-mounted display (not shown) recognize video and audio acquired from the second interface device 5 corresponding to the output apparatus 4.

The virtual activity construction unit 11 virtually constructs human activity of the subject in the real space in the information space in real time based on the subject's human and environment information output from the human and environment information input/output unit 10.

Here, the term "information space" refers to a virtual space generated by a computer, which is represented by a three-dimensional virtual space constructed on a network (cloud 3) and its service, the metaverse. The required functionality of this information space must allow bidirectional network communication with the real space. When the information space is used as a general-purpose platform, it is desirable that the system providing the information space be open, and that user management and access restriction functions be added. Examples of information spaces that fulfill these functions include Second Life (registered trademark) provided by Linden Lab and OpenSim provided under the Berkeley Software Distribution License (BSD License).

The information generation unit 12 generates human characteristic information specific to the subject while analyzing human activities of the subject that are constructed in the information space by the virtual activity construction unit 11. This human characteristic information is a unique property obtained from analysis results of the subject's human activities and is treated as subject's state variables (transiently changing biological state) formed by the subject's biological parameters (cranial nerve, physiological, physical, and skeletal systems) and the environment information applied to the subject.

The human characteristic information specific to the subject can be represented as a compartmental model of the body fluid system described by matrices, state variables, environment information (including disturbances), parameters and eigenvalues.

The compartmental model is not only used in pharmacodynamic studies (studies in the field of transfer of substances and water between body fluids) to quantitatively evaluate the absorption, distribution, metabolism, and efflux of tracers (the transferred amount and concentration of each transferred substance, such as ions and proteins, and the water that makes up the body fluid that serves as the solvent) but also is widely used to predict bioavailability from experimental animals to humans and plays a central role in issues of bioavailability and bio-equivalence in tracer evaluation (including water transport).

Generally, the administration of a tracer raises the issue of its blood concentration. This is due to the fact that the tracer's blood concentration trend reflects its distribution to organs and tissues and its ability to be eliminated by metabolism and efflux in the body. The blood concentration trend of the tracer is defined by values indicating dose, mean blood concentration (systemic clearance), and rate of decrease (biological half-life), and these values are estimated for physiological characteristics of the organism.

The volume of distribution, which indicates the relationship between tracer dose and body concentration, is generally proportional to body weight and is said to determine systemic clearance and biological half-life. In this manner, by examining a blood concentration of a tracer, in vivo kinetics are clarified. In tracer kinetics, the organism (as a whole) is represented by a system of differential equations with tracer balance results. The components (processing compartments) indicated in this differential equation are called compartments.

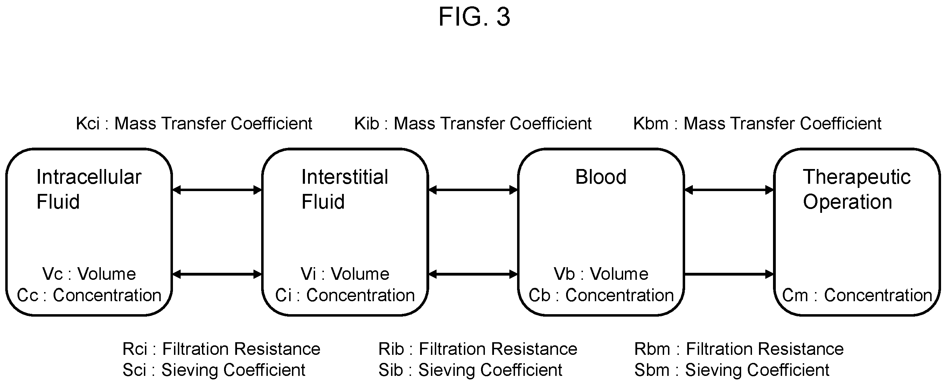

For example, as shown in Figure 3, a three-compartment model including intracellular fluid, interstitial fluid, and blood will be described as a body fluid system model. In this compartment model, it is possible to transition to a therapeutic operation through the blood compartment.

When a distribution volume of a compartment of intracellular fluid is defined as Vc and a tracer concentration thereof is defined as Cc, a distribution volume of a compartment of interstitial fluid is defined as Vi and a tracer concentration thereof is defined as Ci, and a distribution volume of a compartment of blood is defined as Vb and a tracer concentration thereof is defined as Cb, biological characteristics (a body fluid system) of a subject can be represented as a matrix representing a coupling scheme among compartments, as shown in the following equation (1).

[Equation 1]

$$
\begin{pmatrix} \dot{C}_c \\ \dot{C}_i \\ \dot{C}_b \\ \dot{V}_c \\ \dot{V}_i \\ \dot{V}_b \end{pmatrix} = \begin{pmatrix} \frac{-K_{ci}-\dot{V}_c+S_1}{V_c} & \frac{K_{ci}-S_1}{V_c} & 0 & 0 & 0 & 0 \\ \frac{K_{ci}-S_1}{V_i} & \frac{-K_{ci}-K_{ib}-\dot{V}_i+S_1+S_2}{V_i} & \frac{K_{ib}-S_2}{V_i} & 0 & 0 & 0 \\ 0 & \frac{K_{ib}-S_2}{V_b} & \frac{-K_{ib}-K_{bm}-\dot{V}_b+S_2+S_3}{V_b} & 0 & 0 & 0 \\ \frac{2K_c}{R_{ci}} & -\frac{2K_c}{R_{ci}} & 0 & \frac{1.5K_r V_{c(0)}}{R_{ci}V_c^2} & \frac{1.5K_r V_{c(0)}}{R_{ci}V_i^2} & 0 \\ -\frac{2K_c}{R_{ci}} & \frac{2K_c}{R_{ci}}+\frac{2K_c}{R_{ib}} & -\frac{2K_c}{R_{ib}} & -\frac{1.5K_r V_{c(0)}}{R_{ci}V_c^2} & \frac{1.5K_r V_{c(0)}}{R_{ci}V_i^2}+\frac{1.5K_r V_{b(0)}}{R_{ib}V_i^2} & -\frac{1.5K_r V_{b(0)}}{R_{ib}V_b^2} \\ 0 & -\frac{2K_c}{R_{ib}} & \frac{2K_c}{R_{ib}} & 0 & -\frac{1.5K_r V_{b(0)}}{R_{ib}V_i^2} & \frac{1.5K_r V_{b(0)}}{R_{ib}V_b^2} \end{pmatrix} \begin{pmatrix} C_c \\ C_i \\ C_b \\ V_c \\ V_i \\ V_b \end{pmatrix} + \begin{pmatrix} 0 & 0 & 0 \\ 0 & 0 & 0 \\ \frac{K_{bm}+F_o-S_3}{V_b} & 0 & 0 \\ 0 & 0 & 0 \\ 0 & 0 & 0 \\ 0 & 1 & -K \end{pmatrix} \begin{pmatrix} C_o \\ F_o \\ P_b \end{pmatrix}
$$

$$
\left( S_1 = S_{ci}\frac{\dot{V}_c}{2}, S_2 = S_{ib}\frac{F_o-V_b}{2}, S_3 = S_{bo}\frac{F_o}{2} \right)
$$

$$\cdots\cdots (1)$$

Here, Kci, Kib, and Kbm represent inter-compartment substance transfer coefficients, respectively; Rci, Rib, and Rbm represent filtration resistance ratios, respectively; and Sci, Sib, and Sbm represent sieving coefficients, respectively.

Thus, the subject's biological characteristics (in this case, the body fluid system) are determined by the nature of the eigenvalues of the matrix expressed in equation (1) above. In generating human characteristic information specific to the subject, the case has been described in which the information is expressed as a model described by a matrix, state variables, environment information (including disturbances), parameters, and eigenvalues, but in reality, the information may be expressed as a model consisting of a learning system or function system such as a multidimensional neural network.

Further, unique information of human characteristics of the subject is treated as state variables of the subject (a transiently changing biological state) formed by biological parameters of the subject (cranial nerve, physiological, physical, and skeletal systems) and environment information (environment information applied to the subject).

As described above, the subject's human characteristics can be represented by matrices and state variables, and can be treated as eigenvalues for the fundamental human characteristics. A class constituted based on such a concept of characteristics unique to a subject represents unique human characteristics, and as this class changes, responses change accordingly.

By labeling this with abstract concepts such as "sick," "cured," "improved," "worse," "stubborn," "robust," and so on, the meaning can be easily understood by ordinary people by connecting it to the meaning of everyday properties.

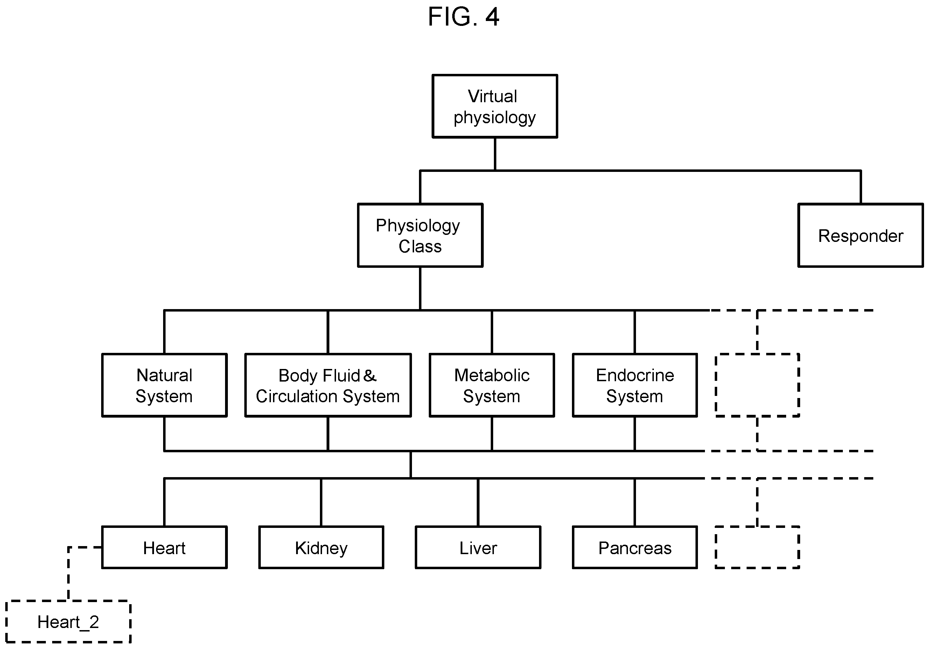

The aforementioned body fluid system model is diverged to construct a virtual human body model as shown in Figure 4. This virtual human body model has an architecture in which classes are defined mainly based on organs and functions (with classes configured as units capable of parameter identification and state observation), and behavior of a virtual human body is computed through interactions of information. By adding classes in a separately configured mental model to this virtual human body model, it is possible to construct human characteristics that reflect the individual human characteristics of the system as a whole, depending on parameters and observed state of each individual.

As a result, the space sharing system 1 can virtually construct the subject's human activities in the information space based on the subject's human and environment information, and create human characteristic information specific to the subject from the analysis results of the human activities, so that when the subject engages in support activities for people or cooperative activities with people at a location different from his/her current location, he/she can reflect the human characteristic information specific to him/her into the content of his/her activities.

(2) Detailed Configuration and Functions of Human and Environment Information Input/Output Unit

(2-1) Configuration of Vital Sign Measurement Apparatuses

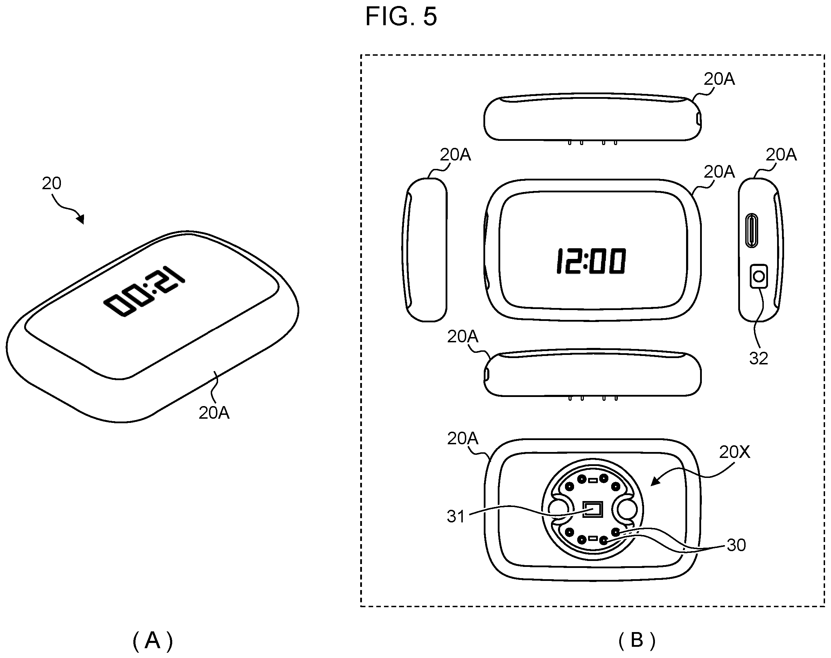

Specifically, as shown in Figure 5(A), the vital sign measurement apparatus 20 has an electrode terminal group 30 and a photoelectric probe window 31 arranged in a predetermined pattern on a measurement surface 20X of the device body 20A and is configured to measure the subject's biological information through the measurement surface 20X. The biometric information covered by the vital sign measurement apparatus 20 is a measurement result of at least one or more of electrocardiogram, pulse rate, pulse pressure, oxygen saturation, body temperature, electroencephalogram, blood glucose level, blood pressure, and myoelectricity. In other words, the vital sign measurement apparatus 20 is configured so that the same device body can be used as means for measuring all types of biometric information.

As shown in Figure 5(B), the vital sign measurement apparatus 20 has a sound collection microphone 22 detachably connected to a connection terminal 32 provided on a side of the device body 20A, which can collect vibrations generated from the subject's larynx and pharynx as acoustic signals when connected. As a result, information about the subject regarding vibrations (non-audible region) of the heart or respiration that cannot be heard by the ears can be acquired.

(2-2) Detection Method of Brain and Nervous System Information

The human and environment information input/output unit 10 has, as an additional configuration of the vital sign measurement apparatus 20, a brain activity measurement unit 40 that is attached to the subject's head and measures electroencephalograms (EEG) and cerebral blood flow in the area to be measured on the head. The information detection unit 25 then converts the transmission state of the central nervous system centered on the head into quantitative nervous system data based on EEG and cerebral blood flow measurement data obtained from the brain activity measurement unit 40.

A brain activity measurement unit 40 according to the present embodiment is in line with the contents described in Japanese Patent No. 5283700 by the present inventor and uses the same principle.

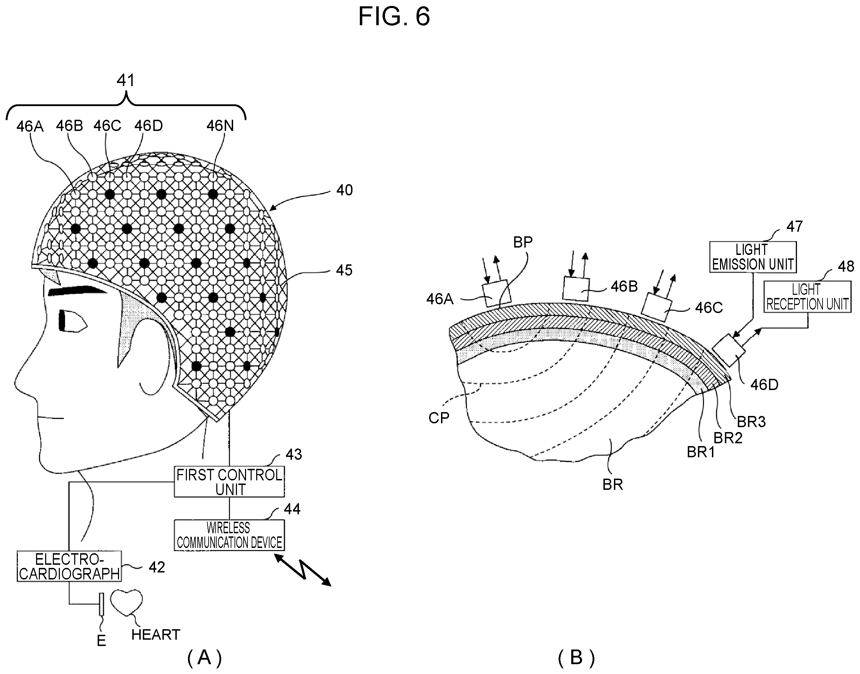

As shown in Figure 6(A), the brain activity measurement unit 40 has a blood flow measurement unit 41, an electrocardiograph 42, a first control unit 43, and a wireless communication device 44. The blood flow measurement unit 41 measures the state of blood flow by changes in the optical path and transmitted light intensity of the laser light due to blood flow, and also measures the state of brain activity from the state of blood flow in the brain.

When laser light irradiated onto blood enters a blood layer, the laser light propagates through the blood as light including both a reflected and scattered light component due to normal red blood cells and a reflected and scattered light component due to attached thrombi. Since the amount of laser light transmitted through the blood layer varies from moment to moment depending on the state of the blood, it is possible to observe various changes in the state of the blood by continuously measuring the amount of transmitted light (amount of reflected light) and observing the changes in the amount of light.

The blood flow measurement unit 41 includes a net-like base 45 formed in a hemispherical shape according to the outline of the head to be worn on the head, and many sensor units 46A to 46N. Each of the sensor units 46A to 46N is supported at predetermined intervals by the net-like base 45 and outputs a detection signal of the amount of transmitted light measured at each measuring point on the head to the first control unit 43. The electrocardiograph 42 measures the cardiac potential generated by an electrode E affixed to the subject's skin in response to heart movement.

The first control unit 43 measures the state of brain activity (distribution of red blood cells) by deriving the displacement of blood vessels and tissue around blood vessels due to blood flow based on the light intensity when light emitted from a light emission unit 47 (Figure 6(B)) of each sensor unit 46A to 46N is received by a light reception unit 48. The first control unit 43 also stores a control program that performs arithmetic processing to cancel the component due to oxygen saturation in the signals obtained from at least two or more of the light reception units 48.

Furthermore, the first control unit 43 derives the displacement of the inner wall of the blood vessel based on the displacement of the blood vessel and the tissue surrounding the blood vessel. Furthermore, the first control unit 43 acquires the pulse wave velocity at each measurement position from the phase difference between the waveform of the electrocardiogram signal of the electrocardiograph 42 and the waveform of the detection signal obtained from the light reception unit 48 and derives the displacement state of the inner wall of the blood vessel from the pulse wave velocity.

The wireless communication device 44 wirelessly transmits the measurement results (blood flow data) output from the first control unit 43 to the vital sign measurement apparatus 20. The brain activity measurement unit 40 has the optical sensor units 46A to 46N arranged on the net-like base 45, so that blood flow throughout the head can be measured simultaneously.

When measuring the vascular characteristics of the brain, as shown in Figure 6(B), the first control unit 43 selects any sensor unit 46D from the many arrayed sensor units 46A to 46N and emits a laser light from the light emission unit 47 of the sensor unit 46D. The laser light emitted from the light emission unit 47 is output at a wavelength $\lambda$ ($\lambda \approx 805$ nm), which is not affected by oxygen saturation.

In the brain activity measurement unit 40, when the blood flow measurement unit 41 is attached to the subject's head, the elasticity of the net-like base 45 holds the plurality of sensor units 46A to 46N in position at each measurement point on the head and with each measurement surface facing the head surface. When the blood flow measurement unit 41 is worn on the head, the plurality of sensor units 46A to 46N irradiate light onto the surface of the brain and measure the pulse wave propagation velocity in the arteries of the brain from changes in the amount of received light that propagates through the brain to measure the vascular characteristics (rate of elasticity of the blood vessel, amount of plaque in the blood vessel, rate of arterial stiffness) of the middle cerebral artery and anterior cerebral artery.

The principle of measuring pulse wave propagation velocity of cerebral arteries is explained below. For example, pulse wave propagation velocity due to blood flow through the middle cerebral artery and anterior cerebral artery is detected by each of the sensor units 46A to 46N, which are arranged corresponding to the positions to be measured that receives light propagated through the brain when light is irradiated. As a measurement method, a method is used in which a waveform of a cardiac potential obtained from the electrocardiograph 42 is compared with waveforms of signals output from the respective sensor units 46A to 46N at measurement target positions, a pulse wave propagation velocity is obtained from a phase difference, and vascular characteristics corresponding to the pulse wave propagation velocity are derived.

The principle of detecting vascular characteristics from blood flow in the brain is also explained. As shown in Figure 6(B), the brain BR is covered by spinal fluid BR1, skull BR2, and scalp BR3. Some of the laser light emitted from the light emission unit 47 of each of the sensor units 46A to 46N of the blood flow measurement unit 41 is reflected by the scalp BR3, but the remaining light penetrates the scalp BR3, skull BR2, and spinal fluid BR1 and travels inside the brain BR. The light irradiated to the head that has traveled to the brain propagates in the radial direction (depth and radial direction) in a circular arc pattern CP, as shown by the dashed lines in the figure.

Light propagation through the brain decreases in light transmittance as the light propagation path lengthens the further radially away from a base point BP where the laser light was irradiated. Therefore, the light-receiving level (amount of transmitted light) of the sensor unit 46B, which is adjacent to the sensor unit 46A on the emitting side and separated by a predetermined distance, is strongly detected. The light-receiving level (amount of transmitted light) of the sensor unit 46C, which is located next to the sensor unit 46B and separated by a predetermined distance, is detected weaker than that of the sensor unit 46B. The light reception unit 48 of the sensor unit 46A on the emitting side also receives light from the brain.

The first control unit 43 uses the detection signals corresponding to the light intensity received by the plurality of sensor units 46A to 46N as measurement data and compares their waveforms with the waveform of the cardiac potential signal from the electrocardiograph 42 to derive the vascular characteristics at each measurement position. Performing mapping processing on these detection results can also provide graphic data showing the distribution of arterial stiffness according to pulse wave propagation velocity.

Therefore, it is possible to measure changes in blood flow through the middle cerebral artery and anterior cerebral artery using the detection signal waveforms of each sensor unit 46A to 46N, and detect pulse wave propagation velocity in the brain from the measurement data of the blood flow changes.

Thus, the vital sign measurement apparatus 20 has the brain activity measurement unit 40 that is attached to the subject's head and measures EEG and cerebral blood flow in the area to be measured on the head, and the information detection unit 25 also adds, as nervous system data, the transmission state of the central nervous system centered on the head based on EEG and cerebral blood flow measurement data obtained from the brain activity measurement unit 40. In this way, the state of transmission of the central nervous system from the subject's brain can also be quantitatively acquired as data, and the subject's progress state and transition state can be monitored.

As a result, the state of transmission of the central nervous system from the subject's brain can also be quantitatively acquired as data, and the subject's progress state and transition state can be monitored.

(2-3) Detection Method of Muscular and Skeletal System Information

The human and environment information input/output unit 10 has, as an additional configuration of the vital sign measurement apparatus 20, a biological signal measurement wearing device 50 worn by a subject and a joint periphery detection unit (not shown). The joint periphery detection unit includes an actuator that is driven actively or passively in association with limb movements of a subject, and detects physical quantities around joints accompanying the limb movements of the subject based on output signals from the actuator.

The physical quantities around joints include at least one or more parameter identification results among generated muscle forces produced in a musculoskeletal system, ranges of motion of respective joints, movement velocities and response velocities, autonomous control characteristics with respect to disturbances, moments of inertia of a frame, mass, and a center of gravity, impedance adjustment results of a joint system including flexor muscles and extensor muscles (viscous characteristics due to friction), electrical physical quantities (command signals), and the like.

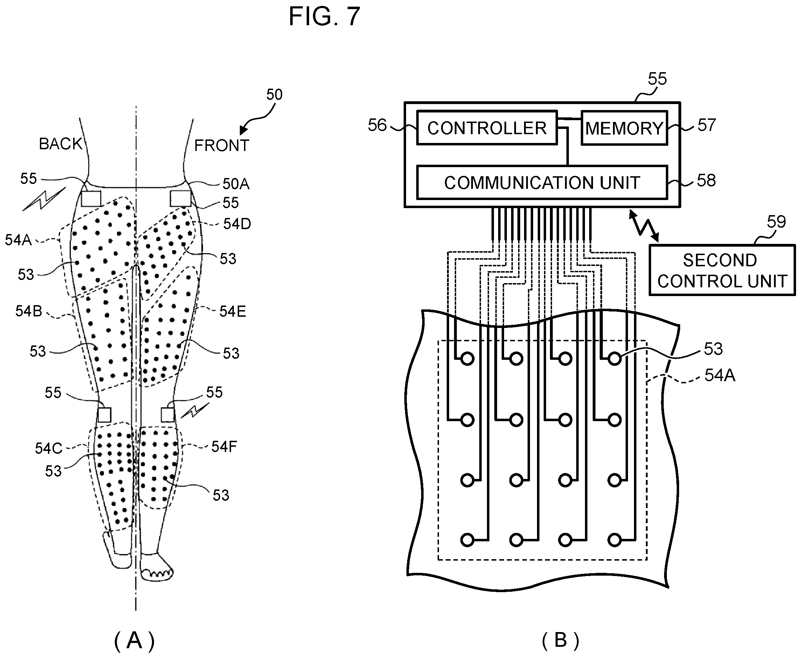

The biological signal measurement wearing device 50 worn by a subject is in line with the contents described in Japanese Patent No. 5409637 by the present inventor and uses the same principle. Figure 7(A) shows the biological signal measurement wearing device 50 according to this embodiment. The biological signal measurement wearing device 50 has a wearing device body 50A that is formed so as to cover a body surface of a subject and is worn by the subject, and on an inner surface of the wearing device body 50A (a surface that contacts the body surface of the subject in a worn state), the biological signal measurement wearing device 50 includes a biological signal sensor 53 that detects biological potential signals at least one position at which biological signals can be measured from the body of the subject.

A biological signal is a signal originating from electricity generated within a body of a subject, is a signal measurable from the body, and is a signal that changes in time series in association with bodily movements and signals from a brain. For example, biological signals mean signals generated by biological activities, such as neural potentials, myoelectric potentials, electroencephalograms, and cardiac potentials, potentials generated by motion artifacts (effects of movement), potentials generated by biochemical reactions, and vibrations such as pulse waves generated by heartbeats. The generation potential (amplitude, density, time delay) and the site of generation of the biological signal are also taken into account for quantitative data generation.

In Figure 7(A), the biological signal measurement wearing device 50 in this example has a symmetrical structure, so the left half of the figure shows the structure behind the left leg and the right half of the figure shows the structure in front of the left leg. The wearing device body 50A is provided with biological signal sensor groups 54A to 54F each including a plurality of biological signal sensors 53 that detect biological signals of a subject. The biological signal sensors 53 are arranged at equal intervals along the muscle flow of the subject's legs.

The plurality of biological signal sensors 53 are arranged on the wearing device body 50A along a flow of a gluteus maximus muscle at a portion corresponding to buttocks of a subject (biological signal sensor group 54A). Similarly, at a portion corresponding to a rear side of a thigh of the subject (biological signal sensor group 54B), biological signal sensors are arranged along flows of a biceps femoris muscle, a semimembranosus muscle, and a semitendinosus muscle, and at a portion corresponding to a calf (biological signal sensor group 54C), biological signal sensors are arranged along a flow of a triceps surae muscle. Also, in a region corresponding to the anterior side of the hip joint (biological signal sensor group 54D), sensors are arranged along the course of the adductor longus and the iliopsoas; in a region corresponding to the anterior side of the thigh (biological signal sensor group 54E), sensors are arranged along the course of the quadriceps femoris; and in a region corresponding to the shin (biological signal sensor group 54F), sensors are arranged along the course of the tibialis anterior, the soleus, and the extensor digitorum longus.

Here, Figure 7(B) is a diagram showing an example of a measurement module connected to biological signal sensor groups in the wearing device body 50A. Since all biological signal sensor groups 54A to 54F in the wearing device body 50A are connected to the measurement module 55 in the same way, the biological signal sensor group 54A is used as an example here.

Figure 7(B) is a diagram schematically showing the biological signal sensor group 54A in the wearing device body 50A and the measurement module connected to this biological signal sensor group 54A. Each of the biological signal sensors 53 included in the biological signal sensor group 54A is insulated from each other, and each is connected to the measurement module 55 via conductive wiring. Each of these biological signal sensors 53 is assigned an address.

The measurement module 55 includes a measurement module controller 56 to which a plurality of biological signal sensors 53 constituting the biological signal sensor group 54A are connected, the measurement module controller 56 selecting at least two biological signal sensors 53 from these biological signal sensors 53 and acquiring a biological signal by taking a difference between detection signals detected by the selected biological signal sensors 53; a memory 57 that records the acquired biological signal; and a communication unit 58 that transmits to the outside biological signals sequentially acquired and/or biological signals recorded in the memory 57. The measurement module 55 is provided for each biological signal sensor group 54A to 54F, to which the respective biological signal sensors 53 are connected.

The measurement module controller 56 has electronic circuit capable of sequentially selecting at least two biological signal sensors 53 from the plurality of connected biological signal sensors 53 in response to a command signal input via the communication unit 58 and acquiring the biological signals between these two selected biological signal sensors 53.

The measurement module controller 56 further has signal processing means such as a filter that removes or extracts predetermined frequency components from the biological signals thus acquired and an amplifier that amplifies the acquired biological signals. The biological signals thus acquired are output from the measurement module controller 56 to the communication unit 58 and/or the memory 57. When selecting the biological signal sensors 53, the measurement module controller 56 may operate each biological signal sensor 53 sequentially in a preset order, or it may select the biological signal sensor 53 at the address designated by the designation signal based on a designation signal input via the communication unit 58.

The communication unit 58 has a thin antenna and a communication circuit connected to this antenna. The communication unit 58 transmits, via an antenna, measurement information to a second control unit 59, the measurement information including a signal that includes a biological signal output from the measurement module controller 56 and information such as an address indicating position information of a biological signal sensor 53 that detected the biological signal, and/or a signal that includes a biological signal read from the memory 57 and information such as an address indicating position information of a biological signal sensor 53 that detected the biological signal.

This second control unit 59 generates a designation signal to specify which of the biological signal sensors 53 is to be selected from each of the biological signal sensor groups 54A to 54F provided in the wearing device body 50A, and signals to start and end data acquisition, etc., and selects the designated biological signal sensor 53 according to the signal and measures the biological signals.

Thus, with the biological signal measurement wearing device 50 of the present invention, the biological signal sensor groups 54A to 54F having the plurality of biological signal sensors 53 are provided in the wearing device body 50A, so that the plurality of biological signal sensors 53 can be placed at a given site at once by simply wearing the wearing device body 50A, allowing to detect biological signals at each point by placing them in close contact with the skin surface. Thus, even when biological signals are monitored at a large number of points on the body surface of a subject, it is possible to eliminate the labor of attaching and detaching the biological signal sensors 53 one by one, and to easily measure biological signals.

By detecting biological signals with the plurality of biological signal sensors 53 in this manner, biological signals can be measured at a plurality of respective points in the area where the biological signal sensor groups 54A to 54F are located. The measured data at each point can then be mapped according to the address assigned to each of the biological signal sensors 53 to measure the distribution of biological signals in the subject's body.

The second control unit 59 obtains from the biological signals acquired by the measurement module 55 the myopotential signals associated with the subject's muscle activity and the neurotransmission signals for operating the subject's musculoskeletal system.

The information detection unit 25 converts, based on the physical quantities around the joint described above and one or both of the myopotential signals and neurotransmission signals obtained from the second control unit 59, the activity state of the musculoskeletal system centered on the joint and/or the transmission state of the peripheral nervous system into quantitative musculoskeletal data and/or nervous system data, and also converts the transmission state of either or both of the central nervous system and the peripheral nervous system centered on a desired site into quantitative nervous system data.

As a result, the subject can perform limb movements to obtain quantitative data on the activity state of the musculoskeletal system and the transmission state of the peripheral nervous system based on physical quantities around joints and biological signals obtained from body surface sites with reference to joints, and to monitor the subject's progress state and transition state.

In addition, biological signals are acquired from body surface sites other than sites referenced to the subject's joints, and quantitative data are acquired not only on the peripheral nervous system around the joints but also on the transmission state of the central nervous system and/or the peripheral nervous system from desired sites, thereby making it possible to monitor the progress state and transition state of the subject.

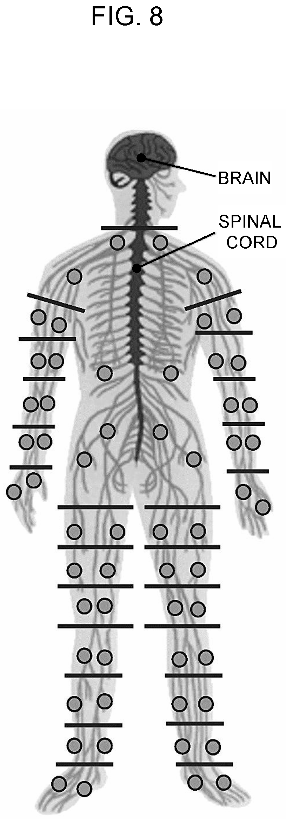

It should be noted that, for example, as shown in Figure 8, by arranging the biological signal sensor groups 54A to 54F over the entire body of the subject, it becomes possible to visualize state transitions of information transmission pathways in the cranial nervous system. In Figure 8, if the entire body of the subject is divided into units of predetermined regions (for example, regions innervated by sensory nerves such as dermatomes), neural connections throughout the entire body can be grasped from a bird's-eye view and on a region-by-region basis. Therefore, if it is possible to detect at which site a problem in nerve transmission has occurred, it becomes possible to ascertain not only the problematic site but also the degree of influence on either the central side or the peripheral side.

(2-4)Method of Detecting Activity State of Physiological System

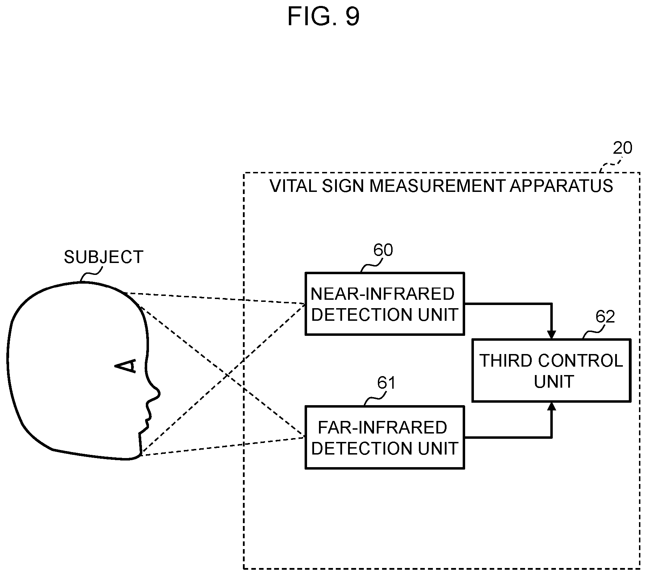

In the human and environment information input/output unit 10, as an additional configuration of the vital sign measurement apparatus 20, as shown in Figure 9, a near-infrared detection unit 60 and a far-infrared detection unit 61 are provided, and activity states of the physiological system and the nervous system of the subject are detected using a non-contact method.

That is, the human and environment information input/output unit 10 simultaneously and noninvasively measures fluctuations in the pulse rate and changes in skin temperature of the subject in daily life by irradiating infrared rays centered on the face of the subject using the near-infrared detection unit 60 and the far-infrared detection unit 61.

The near-infrared detection unit 60 irradiates near-infrared light centered on a region of interest including a cheek area of the subject's face, receives reflected light from the face, and generates a near-infrared image. In addition, the far-infrared detection unit 61 irradiates far-infrared light centered on a region of interest of the subject's face and detects the skin temperature of the face.

The third control unit 62 estimates the pulse rate of the subject based on a period of change of an intensity waveform in a region of interest among reflected light received by the near-infrared detection unit 60. The third control unit 62 extracts, from a near-infrared image generated by the near-infrared detection unit 60, regions of the subject's face that are susceptible to activity of the autonomic nervous system and regions that are less susceptible thereto, respectively, and calculates a temperature difference in skin temperature for each region based on detection results of the far-infrared detection unit 61.

A. Pulse Measurement Method Based on Infrared Light

In biological tissues, light-absorbing substances are water and hemoglobin in blood. Water has a strong absorption property in infrared rays with wavelengths longer than 1350 nm, while hemoglobin has a strong absorption property in visible light with wavelengths shorter than 650 nm. In noninvasive biological diagnosis using light, light in an infrared to near-infrared region having wavelengths from 650 nm to 1350 nm, which have high biological permeability, is irradiated, and reflected light or transmitted light containing biological information is often measured.

A pulse is a physiological phenomenon in which a volume of a blood vessel changes due to blood pressure work caused by cardiac output. A change in a volume of a blood vessel is caused by a change in blood flow volume. Because a change in blood flow volume causes a change in an amount of light absorbed by hemoglobin in blood, it is possible to estimate a pulse rate from a change period of transmitted light or reflected light of light irradiated onto a living body.

In the present invention, without requiring the subject to wear a measurement device and in order to perform measurements regardless of day or night, a change period of reflectance of near-infrared light irradiated onto a living body is measured by a near-infrared camera, and a pulse rate is estimated. Since near-infrared light is invisible, measurement can be performed even at night without imposing a burden on the subject to be measured. In order to estimate a stress state from a pulse rate, it is necessary to measure a pulse rate that finely fluctuates due to activity of the autonomic nervous system.

The third control unit 62 implements an algorithm that extracts a waveform period required for calculating a pulse rate from waveform data obtained from the near-infrared detection unit 60.

The near-infrared detection unit 60 measures the intensity of the reflected light reflected by the irradiated near-infrared rays in the living tissue. The near-infrared detection unit 60 performs measurement for a subject at rest, while minute body movements and facial movements due to respiration are superimposed on a pulse waveform as motion artifacts representing changes in an amount of reflected light.

To remove these motion artifacts, a digital filter is first applied to the pulse rate frequency band. A range of a pulse rate at rest is set to 35 to 180 bpm, and motion artifacts may be superimposed on a measured waveform also in a band of 0.5 to 3.0 Hz, while an amplitude of a waveform superimposed on a pulse waveform is significantly large.

Therefore, when a variance value of waveform data within a certain period exceeds a threshold, the third control unit 62 recognizes that the subject is in motion and removes data during that period as data having low reliability. A waveform after band-pass filtering has a bimodal characteristic due to arterial blood flow volume. In order to facilitate feature point extraction, a moving average filter is applied to convert a two-peak waveform into a single-peak waveform.

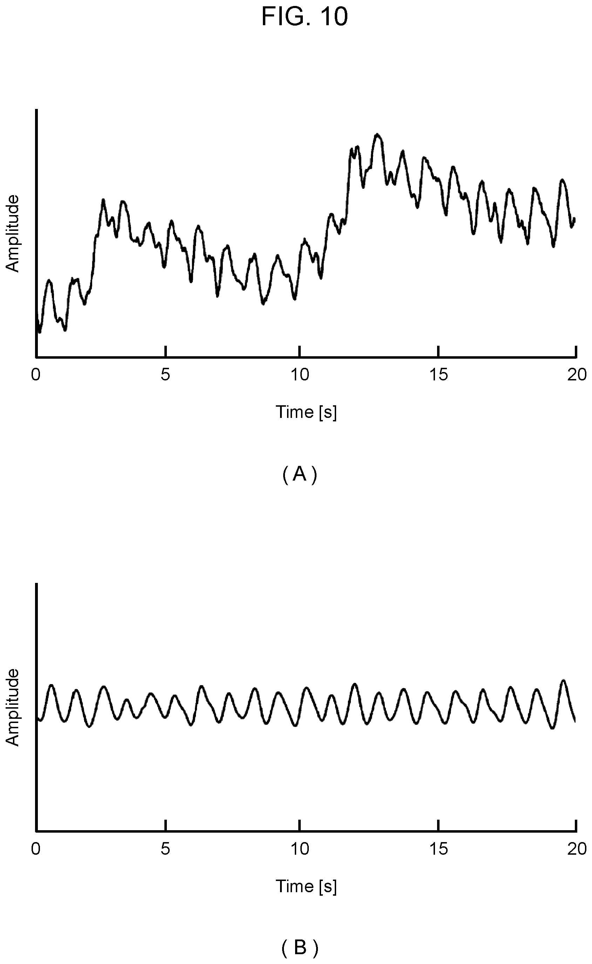

Waveforms before and after application of a band-pass filter and a moving average filter to a measured waveform are shown in Figure 10(A) and Figure 10(B), respectively. It can be seen that motion artifacts superimposed on the pulse waveform are removed by filtering.

Next, as methods for calculating a pulse rate from an intensity waveform of light measured by a near-infrared camera, two major methods are generally known.

In a first method, a cheek portion of a face is set as a region of interest (ROI), and, among frequency spectra obtained by a spectral analyzer from intensity data of reflected light of the cheek portion for 30 seconds acquired by measurement using an RGB camera, a frequency considered to be a pulse wave component is compared with a frequency derived from a pulse rate indicated by a pulse oximeter. However, noise caused by body motion is significantly large relative to a pulse waveform. When attempting to calculate a pulse rate by such frequency analysis, it is necessary to greatly restrict behavior of a subject to be measured.

On the other hand, in a second method, a time required for one pulse beat is calculated from a period of feature points of a waveform detected from time-series data of a measured waveform, and a pulse rate is calculated by dividing 60 by that time. Compared with a method of calculating a pulse rate from frequency analysis that requires continuous measurement data for a certain period of time, a method of calculating a pulse rate from a period of measured feature points enables removal of motion artifacts by removing a feature point period erroneously detected due to noise caused by body motion. In addition, since a minimum measurement time required is shorter than that for frequency analysis and a pulse rate can be calculated from several beats, it is possible to calculate a pulse rate at shorter time intervals.

However, since a pulse rate at rest of a healthy person is 60 to 80 bpm, a period of feature points obtained by measurement for 5 seconds is 5 to 7 beats, and there is a problem in that a number of obtained data points are small in order to calculate a more accurate pulse rate. In addition, as shown in Figure 10(A), since a waveform of intensity variation is bimodal in synchronization with arterial blood flow volume, erroneous detection of a period of feature points is caused, which becomes a factor that causes an error in a calculated pulse rate.

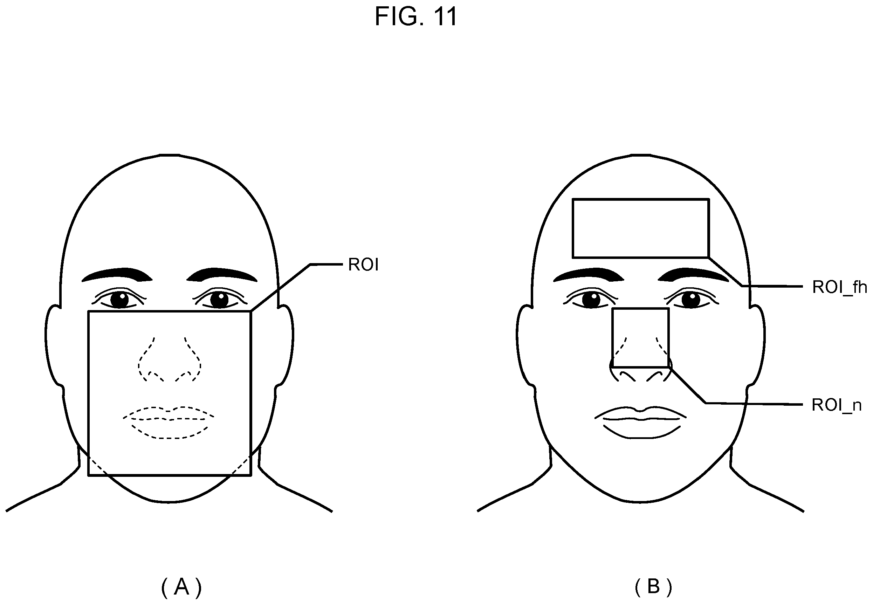

For daily measurement, a biological site to be measured needs to be exposed regardless of day or night. Therefore, in the vital sign measurement apparatus 20 according to the present invention, ROI is set to a cheek portion of a person. The location of the set ROI is shown in Figure 11(A). An average of intensity values measured at pixels within the set ROI is used as a measured value, and a temporal change of the measured value is recorded as pulse waveform data. As periods of feature points of waveform data, not only an upper-end interval $t_{tp}$ of a waveform but also a lower-end interval $t_{bp}$ is added as another feature point, thereby increasing feature points serving as reference data for calculating a pulse rate.

Next, in order to extract a feature point period required for calculating a pulse rate, an algorithm for removing erroneously detected $t_{tp}$ and $t_{bp}$ that do not indicate a pulse period from among detected $t_{tp}$ and $t_{bp}$ is described below in (a) to (f). Here, a set before removal is defined as $S_0$.

(a) For each of $t_{tp}$ and $t_{bp}$, when a peak interval $t_i$ varies by 30% or more relative to an immediately preceding peak interval $t_{i-1}$, the peak interval $t_i$ is removed from set $S_0$. A set $S_1$ of selected peak intervals is represented by Equation (2) shown below.
[Equation 2]

$$S_1 = \{t_i | |t_i - t_{i-1}| < 0.3t_{i-1},\ t_i \in S_0\} \quad\ldots\ldots\quad (2)$$

(b) A standard deviation $\sigma_0$ of set $S_0$ is calculated, and peak intervals $t_i$ that vary within a range of $2\sigma_0$ are removed from set $S_1$. A set $S_2$ of selected peak intervals is represented by Equation (3) shown below.
[Equation 3]

$$S_2 = \{t_i | |t_i - \tilde{t}| < 2\sigma_0, t_i \epsilon S_1\} \quad\ldots\ldots (3)$$

(c) A standard deviation $\sigma_2$ of set $S_2$ is calculated, and peak intervals $t_i$ that vary within a range of $\sigma_2$ are removed from set $S_2$. A set $S_3$ of selected peak intervals is represented by Equation (4) shown below.
[Equation 4]

$$S_3 = \{t_i | |t_i - \tilde{t}| < \sigma_2, t_i \epsilon S_2\} \quad\ldots\ldots (4)$$

(d) A standard deviation $\sigma_3$ of set $S_3$ is calculated, and peak intervals $t_i$ that vary within a range of $\sigma_3$ are removed from $S_3$. A set $S_4$ of selected peak intervals is represented by Equation (5) shown below.
[Equation 5]

$$S_4 = \{t_i | |t_i - \tilde{t}| < \sigma_3, t_i \epsilon S_3\} \quad\ldots\ldots (5)$$

(e) Peak intervals blood remaining in set $S_4$ are converted into pulse rates, and a histogram with bins of 5 bpm is generated. Here, while a width of a pulse rate of one bin of the histogram is uniform, a width of a peak interval corresponding to the pulse rate differs. Accordingly, a weighted histogram is generated using Equation (6) shown below.
[Equation 6]

$$h'_{i-i+5} = \frac{t_{i-i+5}}{t_{30-35}} h_{i-i+5} \quad\ldots\ldots (6)$$

Here, $t_{30-35}$ represents a time width of a peak interval for a pulse rate from 30 bpm to 35 bpm, $t_{i-i+5}$ represents a time width of a peak interval for a pulse rate from i bpm to i+5 bpm, $h_{i-i+5}$ represents a frequency of peak intervals before correction for a pulse rate from i bpm to i+5 bpm, and $h'_{i-i+5}$ represents a corrected value of a frequency of peak intervals for a pulse rate from i bpm to i+5 bpm.

(f) With respect to values of the weighted histogram, a window having a width of 20 bpm is set so that a sum of frequencies of four adjacent bins is maximized, and peak intervals $t_i$ outside the window are removed.

According to the above-described algorithm, an average value of extracted peak intervals is set as a peak interval t within a measurement period, and a value obtained by dividing 60 seconds by the peak interval t is set as a pulse rate.

In this manner, the third control unit 62 sets feature points at an upper end and a lower end, respectively, of an intensity waveform of reflected light obtained from the near-infrared detection unit 60, and estimates a pulse rate based on peak intervals between upper ends and between lower ends, which are periods of the respective feature points. In addition, the third control unit 62 calculates a standard deviation of a plurality of peak intervals and removes peak intervals that do not indicate a pulse period based on the standard deviation. Furthermore, the third control unit 62 generates a weighted histogram in predetermined time units from pulse rates converted based on remaining peak intervals after removal, and corrects a frequency of the peak intervals based on the histogram.

Thus, the third control unit 62 can calculate an accurate pulse rate from a measured waveform of pulse waveform data for a relatively short period of time based on a group of pixels within the set ROI.

B. Skin Temperature Measurement Using a Far-Infrared Detection Unit

Heat generated inside a living body is transported to a body surface by conduction and convection. However, since heat conduction by biological tissue itself is poor and acts as thermal insulation, most transport of heat to the skin is considered to be due to skin blood flow. Skin blood flow volume varies due to activity of the autonomic nervous system, mainly through vasoconstriction and vasodilation effects of the sympathetic nervous system and the parasympathetic nervous system.

In conventional prior studies, attempts have been made to estimate activity of the autonomic nervous system by measuring changes in skin temperature. However, since a facial heat distribution is greatly affected by a hairstyle of the subject to be measured and whether the subject to be measured wears glasses, the human and environment information input/output unit according to the present invention is configured to set an appropriate measurement site for estimating activity of the autonomic nervous system based on a near-infrared image.

In order to estimate a stress state from changes in skin temperature, it is necessary to set, as ROI to be measured, a facial site at which temperature changes due to stress prominently appear. Among facial sites, arteriovenous anastomoses (AVA), which are highly susceptible to activity of the autonomic nervous system, are particularly concentrated in a nasal region, making the nasal region suitable for skin temperature measurement for the purpose of estimating a stress state.

In addition, since skin temperature is affected by ambient air temperature, changes in skin temperature need to be recorded as relative temperature. At this time, ROI measured as a reference for changes in skin temperature of the nasal region needs to be set at a site that is less susceptible to activity of the autonomic nervous system. As a facial site having a low density of AVA and being less susceptible to activity of the autonomic nervous system, a forehead region can be cited.

Based on the above, in the third control unit 62 according to the present invention, changes in skin temperature are recorded as a temperature difference between a region of interest ROI_n of a nasal region and a region of interest ROI_fh of a forehead region. Locations of the respective ROIs are shown in Figure 11(B). In addition, an equation for calculating a temperature change is shown in Equation (7).

[Equation 7]

$$\mathrm{T_r \ = \ T_n \ - \ T_{fh}} \ \ldots\ldots \ (7)$$

Here, $T_n$ represents an average value of skin temperatures measured at all pixels within ROI_n, $T_{fh}$ represents an average value of skin temperatures measured at all pixels within ROI_fh, and $T_r$ represents a relative temperature between the forehead region and the nasal region. In setting each ROI, coordinates of a nasal region and a forehead region in a near-infrared image are converted into coordinates in a far-infrared image.

Specifically, in performing coordinate conversion from a near-infrared (NIR) image to a far-infrared (FIR) image, since a near-infrared camera and a far-infrared camera differ in resolution and angle of view, coordinate information of the near-infrared image is associated with pixels of the far-infrared image.

That is, an x-coordinate $X_{fir}$ on a far-infrared image is expressed as shown in the following Equation (8), where a horizontal angle of view of a near-infrared camera is $\theta_{nir\_h}$ and a horizontal angle of view of a far-infrared camera is $\theta_{fir\_h}$.

[Equation 8]

$$x_{\mathrm{fir}} = \frac{40}{\tan\frac{\theta_{\mathrm{fir\_h}}}{2}}\left(\frac{\tan\frac{\theta_{\mathrm{nir\_h}}}{2}}{320}x_{\mathrm{nir}} + \tan\frac{\theta_{\mathrm{fir\_h}}}{2} - \tan\frac{\theta_{\mathrm{nir\_h}}}{2}\right) \ \ldots\ldots \ (8)$$

In addition, a y-coordinate Yfir on a far-infrared image is expressed as shown in the following Equation (9), where a vertical angle of view of a near-infrared camera is $\theta_{nir\_v}$ and a vertical angle of view of a far-infrared camera is $\theta_{fir\_v}$. Here, d represents a difference between optical axes, and L represents a distance to an object.

[Equation 9]

$$y_{\text{fir}} = \frac{30}{\tan\frac{\theta_{\text{fir\_v}}}{2}}\left(\frac{\tan\frac{\theta_{\text{nir\_v}}}{2}}{240}y_{\text{nir}} + \tan\frac{\theta_{\text{fir\_v}}}{2} - \tan\frac{\theta_{\text{nir\_v}}}{2} - \frac{d}{L}\right) \quad \cdots\cdots \quad (9)$$

Thus, following automatic detection results of a measurement target site using image information of the near-infrared detection unit 60, the third control unit 62 can accurately calculate a relative temperature difference between skin temperatures of a forehead region and a nasal region of a subject based on image information of the far-infrared detection unit 61.

C. Respiration Measurement Based on Skin Temperature

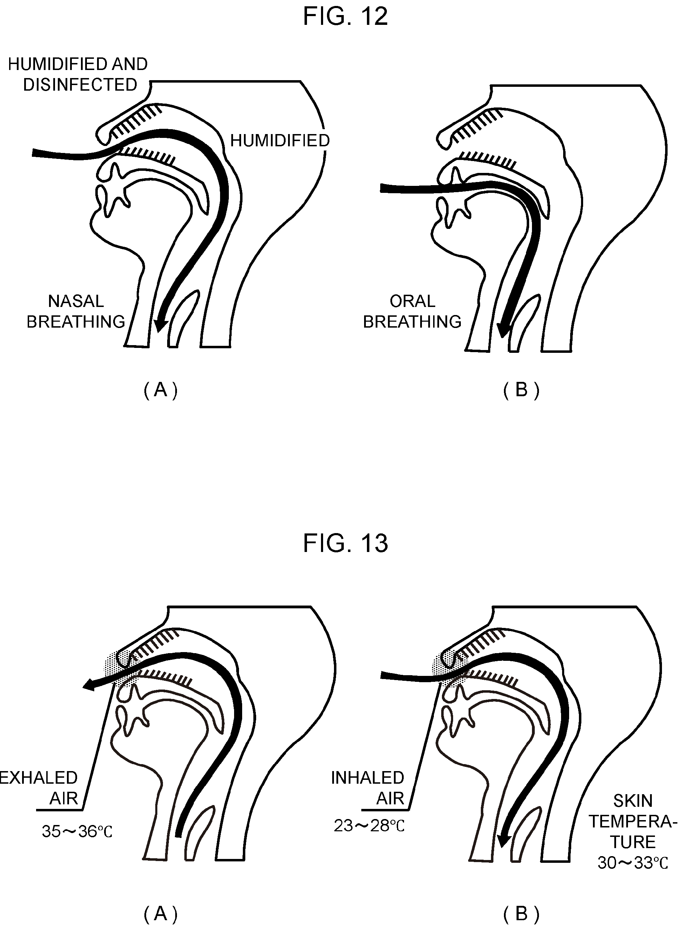

Respiration is related to functions of the autonomic nervous system and immunity, and is used for diagnosis of sleep disorders. Respiration includes nasal breathing (Figure 12(A)) and oral breathing (Figure 12(B)), and nasal breathing is originally preferable. In the case of oral breathing, inhaled air does not pass through cilia and mucosa of the nasal cavity. In addition, oral breathing causes various diseases, including sleep apnea syndrome (SAS).

As shown in Figure 13(A) and Figure 13(B), nostrils and an oral cavity are warmed by exhaled air (35 to 36 °C) and cooled by inhaled air (23 to 28 °C). Therefore, a region of interest (ROI) is set at nostrils and an oral cavity of a subject, and temperature changes of the nostrils and the oral cavity due to respiration are measured by a far-infrared detection unit (a far-infrared camera). Since a surface temperature of skin is affected by ambient air temperature, measurement is performed as a relative temperature between nostrils and an oral cavity.

In practice, since automatic detection of a measurement target site based on a skin temperature distribution map is difficult, as described above, automatic detection of a measurement target site (nostrils and an oral cavity) is performed using image information of a near-infrared detection unit (camera), and a region of interest (ROI) is set. Then, while a nasal temperature in nasal breathing is relatively high, an oral temperature in oral breathing is relatively low.

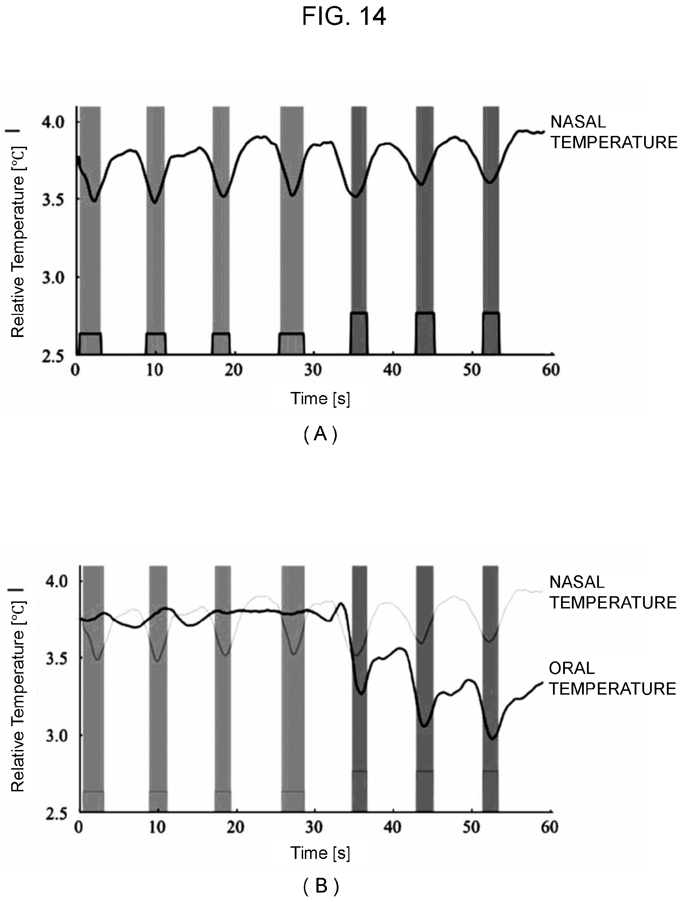

In practice, after nasal breathing and oral breathing by a subject were consecutively measured for 30 seconds each, a one-minute break was provided, and the same respiration measurement was repeated four times. As a result, as shown in Figure 14(A), a decrease in nasal temperature due to inhalation in nasal breathing was observed. In addition, as shown in Figure 14(B), a decrease in oral temperature corresponding to oral breathing was observed.

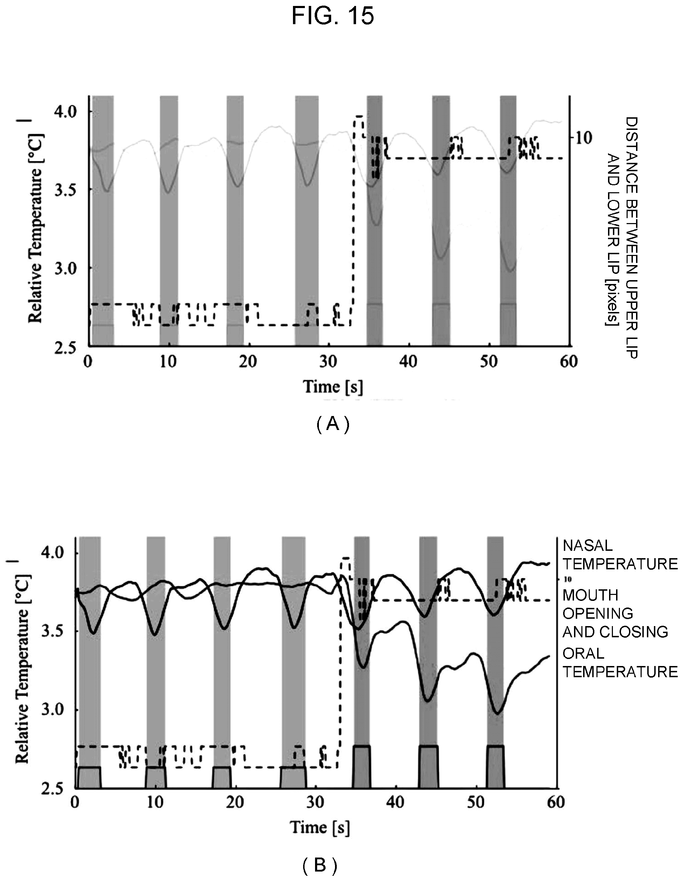

Furthermore, as shown in Figure 15(A), opening and closing of the mouth due to a change in a breathing method from nasal breathing to oral breathing was observed based on a distance between an upper lip and a lower lip. When the graphs of Figure 14(A), Figure 14(B), and Figure 15(A) are superimposed and displayed, they are represented as shown in Figure 15(B).

It should be noted that, as a method for extracting an inhalation timing, first, high-frequency noise is removed from measurement results of a relative temperature between nostrils and an oral cavity using a moving average filter, and then first-order differentiation is performed to extract a temperature decrease timing due to exhalation.

In addition, when a nasal temperature and an oral temperature decrease at the same timing, since air inflow through a nasal cavity pathway occurs due to alveolar pressure becoming negative relative to atmospheric pressure, it becomes possible to determine oral breathing.

In this manner, it is possible to realize calculation of a respiration rate and determination of a respiration method by a non-contact measurement method. Although simultaneous measurement of nasal breathing and oral breathing is possible, by executing an algorithm that takes characteristics of temperature changes during each breathing into account, it is possible to realize accurate calculation of a respiration rate and determination of a respiration method.

D. Oxygen Saturation Using Two Types of Near-Infrared Wavelengths

Conventionally, a pulse oximeter is known as a measurement device that utilizes light absorption characteristics of hemoglobin in blood. A pulse oximeter is a medical device that is attached to a fingertip to measure blood oxygen saturation and a pulse rate.

In the present invention, since blood oxygen saturation has a property of varying depending on a respiration rate, a degree of binding between hemoglobin and oxygen, and cardiac output, attention is focused on a difference in absorption characteristics between oxygenated hemoglobin ($HbO_2$) and reduced hemoglobin (Hb).

In a conventional measurement method, infrared light (with a wavelength around 660 nm) and near-infrared light (with a wavelength around 900 nm) are irradiated onto a fingertip from a light-emitting element, and blood oxygen saturation is estimated from a ratio of amounts of transmitted light measured by a light-receiving element, while a pulse rate is also estimated using periodic changes in an amount of the transmitted light. Infrared light, which is visible light, has been used because a difference in absorptivity between oxygenated hemoglobin ($HbO_2$) and reduced hemoglobin (Hb) is large.

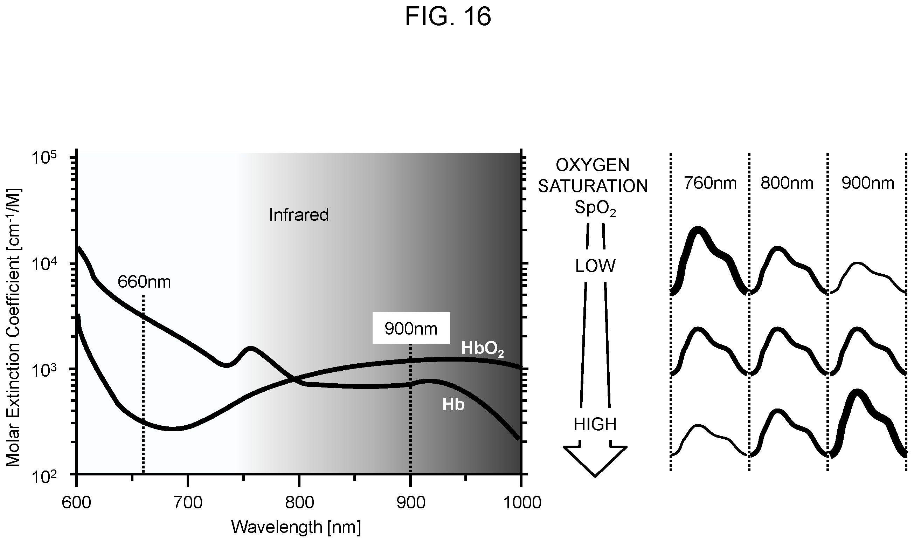

However, in the present invention, non-contact measurement is performed using only near-infrared (NIR) light, which is invisible light (Figure 16). As a result, by alternately blinking light-emitting elements that irradiate two types of near-infrared light having wavelengths of 800 nm (or 760 nm) and 900 nm, and imaging irradiation sites (ROI) of the respective light-emitting elements with a single near-infrared camera (near-infrared detection unit 60), it is possible to measure blood oxygen saturation centered on ROI of a subject in a non-contact manner even in a dark environment.

(2-5) Method of Detecting an Activity State of a Nervous System

The autonomic nervous system includes a sympathetic nervous system that functions when a living body is in a tense state or an active state, and a parasympathetic nervous system that functions when the living body is in a resting state. While a blood pressure value and a pulse rate increase in a state in which the sympathetic nervous system is dominant, a blood pressure value and a pulse rate decrease in a state in which the parasympathetic nervous system is dominant; therefore, autonomic nervous function and cardiac function have a high correlation.

As a method for measuring autonomic nervous function, there is a method for measuring sympathetic nervous function of the heart using heart rate variability; specifically, a CVRR (Coefficient of Variation of R-R intervals) method in which a coefficient of variation is obtained and evaluated using R-R intervals of an electrocardiogram waveform, and, secondly, a method in which a power ratio of frequency components (a high-frequency component and a low-frequency component) of heart rate variability is used as an index of sympathetic nervous activity.

In addition, there is also a method for measuring autonomic nervous function by measuring sympathetic nervous function of a vascular system using a pulse wave. As this measurement method, there is a method in which a magnitude of amplitude fluctuation of a photoplethysmographic (PPG) waveform is calculated as an evaluation value of autonomic nervous function.

In the present invention, the third control unit 62 can contribute to evaluation of autonomic nervous function of a subject (such as presence or absence of imbalance) based on all or a combination of a pulse rate of the subject detected using the near-infrared detection unit 60 and the far-infrared detection unit 61 constituting the human and environment information input/output unit 10, a relative temperature difference between skin temperatures of a forehead region and a nasal region of the subject, a respiration rate and a respiration method of the subject, and an oxygen saturation of the subject.

(2-6) Method of Detecting Psychological Information

In the human and environment information input/output unit 10, the information detection unit 25 analyzes facial expressions and voice of a subject using a facial imaging camera 21 and a sound collection microphone 22 to detect psychological information.

Specifically, the information detection unit 25 detects facial expressions of a subject by executing a facial analysis algorithm, including not only expressions such as sadness, joy, anger, empathy, and frivolity, but also flushed skin, goosebumps, a frequency of eyelid opening and closing, tears, and the like, and simultaneously detects a tone of voice and a pitch of voice (such as a voice tone and a sense of excitement) of the subject by executing a voice analysis algorithm.

This facial analysis algorithm is designed to approximate human interpretation (experience, preconception, and prediction), and is an algorithm obtained from accumulated results regarding how emotions and psychology are reflected in facial expressions based on states and changes of a human face.

Similarly, the voice analysis algorithm is designed to approximate human interpretation (experience, preconception, and prediction), and is an algorithm obtained from accumulated results regarding how emotions and psychology are reflected in voice based on a tone and a pitch of a human voice.

By using this voice analysis algorithm, it becomes possible to estimate a change in a psychological state of a subject through daily communication of the subject and analyses thereof and narrative analysis, based on keywords used in utterances of the subject, intonation during utterances, loudness of voice, a state of narrative structure, continuity or discontinuity of communication, and differences from accumulated data thereof.

In addition, the information detection unit 25 can also estimate a psychological state of a subject based on personal information of the subject (such as heart rate, electrocardiogram, pulse rate, blood pressure, body temperature, skin blood flow distribution, skin temperature distribution, perspiration, and odor substances), which are detection results obtained by the above-described vital sign measurement apparatus 20, and environment information of the subject, which are detection results obtained by a peripheral measurement device 24 described below.

In this manner, the information detection unit 25 can comprehensively estimate and grasp psychological information of a person based on both personal information obtained by sensing and personal information obtained by communication analysis and narrative analysis.

(2-7) Method of Detecting an Activity State of a Motor System (Action Information and Behavior Information)

In the human and environment information input/output unit 10, the information detection unit 25 detects motion data recognized by a motion capture device 23 as an activity state of a motor system of a subject.

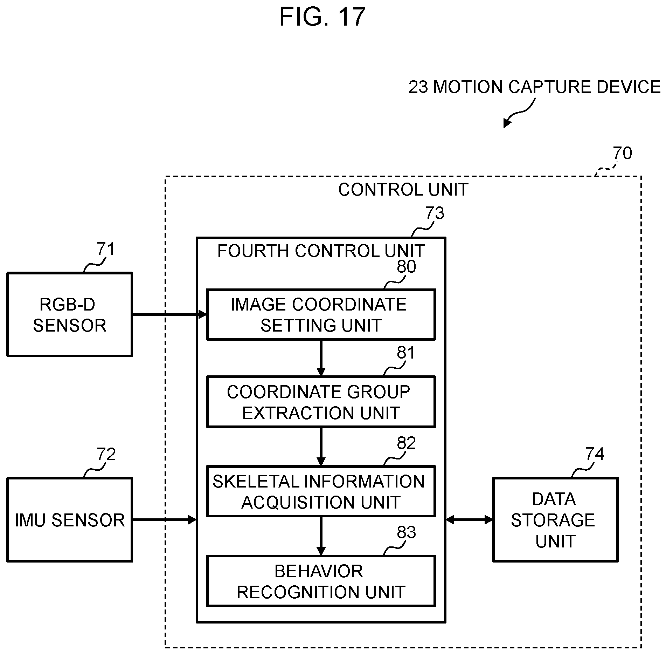

Here, as shown in Figure 17, the motion capture device 23 is arranged in indoor facilities such as a home of a subject, and includes a control unit 70 that controls the entire device, and an RGB-D sensor 71 and an IMU (Inertial Measurement Unit) sensor 72 connected to the control unit 70. The IMU sensor 72 includes a three-axis acceleration sensor, a three-axis angular velocity sensor, and a geomagnetic sensor, and is capable of measuring three-axis acceleration, angular velocity, and geomagnetism.

The RGB-D sensor 71 has a depth sensor capable of measuring a distance from the camera to a target object in addition to an RGB color camera function, and is capable of performing three-dimensional scanning of the target object. As the RGB-D sensor 71, for example, when a LiDAR camera L515 of RealSense (a trademark of Microsoft Corporation of the United States) is applied, the depth sensor includes a LiDAR sensor, and measures a time until laser light irradiated is reflected back after hitting an object to measure a distance and a direction to the object.

In practice, the RGB-D sensor 71 is arranged to capture an entire body of the subject with a standing position of the subject in indoor facilities as a reference, and sequentially acquires an RGB image and a depth image as imaging results.

The control unit 70 includes a fourth control unit 73 including a central processing unit (CPU) that performs overall control of the entire system, and a data storage unit 74 in which various data are database-managed so as to be readable and writable in accordance with instructions from the fourth control unit 73.

The fourth control unit 73 includes an image coordinate setting unit 80, a coordinate group extraction unit 81, a skeletal information acquisition unit 82, and a behavior recognition unit 83. The image coordinate setting unit 80 sets, as image coordinates, a plurality of skeletal representative points assigned to an entire body of a subject while estimating a posture of the entire body of the subject based on RGB images sequentially acquired from the RGB-D sensor 71.

Specifically, the image coordinate setting unit 80 sets an image coordinate group in a two-dimensional coordinate system in which one of left and right shoulder portions of the subject is defined as a coordinate origin, a direction of a line connecting the left and right shoulder portions is defined as an X-axis with respect to the coordinate origin, and a vertical direction with respect to the X-axis is defined as a Z-axis. That is, the coordinate origin is moved to a right shoulder portion or a left shoulder portion, and an XZ plane is rotated so as to coincide with a line connecting the left and right shoulder portions. As a result, it becomes possible to perform action recognition with improved robustness regardless of a position of the RGB-D sensor 71.

The coordinate group extraction unit 81 sequentially extracts, from among image coordinate groups set by the image coordinate setting unit 80, image coordinate groups related to behavior of the subject based on a transition state of posture of the subject. In practice, the coordinate group extraction unit 81 needs to extract key points of an entire body as extraction targets from behaviors, assuming that clothing of the subject and a surrounding environment may change.

Accordingly, the coordinate group extraction unit 81 adopts a lightweight OpenPose architecture using a trained model (a system that estimates a human skeleton by deep learning) to obtain whole-body posture estimation and image coordinates of skeletal representative points of both hands and fingers. For example, for an upper body of a subject, the coordinate group extraction unit 81 sequentially extracts, as an image coordinate group, skeletal representative points totaling 60 points, including 18 points of a torso of the upper body of the subject and 42 points of both hands and fingers (21 points per hand). It should be noted that, by using only stages 1 and 2 among six stages of the OpenPose architecture, it is possible to reduce a computational load by 32.4%.

The skeletal information acquisition unit 82 acquires temporally continuous three-dimensional skeletal information centered on both hands and fingers of a subject by time-synchronizing image coordinate groups sequentially extracted by the coordinate group extraction unit 81 with depth images sequentially acquired from the RGB-D sensor 71.

Specifically, the skeletal information acquisition unit 82 acquires three-dimensional skeletal information by configuring a three-dimensional coordinate system in which a depth direction in depth images sequentially acquired from the RGB-D sensor 71 is defined as a Y-axis, together with a two-dimensional coordinate system of image coordinate groups sequentially extracted by the coordinate group extraction unit 81.

A conversion formula from an image coordinate system of a two-dimensional coordinate system to a world coordinate system of a three-dimensional coordinate system is expressed as shown in the following Equation (10).
[Equation 10]

$$X_{\mathrm{W}} = \mathrm{R}^{-1}\left( Z_{\mathrm{C}}\mathrm{K}^{-1}\begin{bmatrix} x_{\mathrm{I}} \\ 1 \end{bmatrix} - t \right)$$

$$\cdots\cdots (1\ 0)$$

Where $X_W={}^t[X_W,Y_W,Z_W]$ represents coordinates in the world coordinate system, and $x_I={}^t[x_I,y_I]$ represents coordinates in the image coordinate system. K (a $3\times3$ matrix) represents intrinsic parameters of an image sensor, R (a $3\times3$ matrix) represents a rotation matrix for coordinate transformation to the image coordinate system, t (a $3\times1$ vector) represents a translation vector, and $Z_C$ represents depth information corresponding to two-dimensional coordinates in the image coordinate system.

These K, R, and t are calculated by camera calibration using Zhang's method ("A flexible new technique for camera calibration". IEEE Transactions on Pattern Analysis and Machine Intelligence, 22(11):1330-1334, 2000). For calibration to calculate K, a calibration board on which circular dots are printed in a grid pattern was used. Center coordinates of each dot on the calibrated board were calibrated to one-thousandth precision.

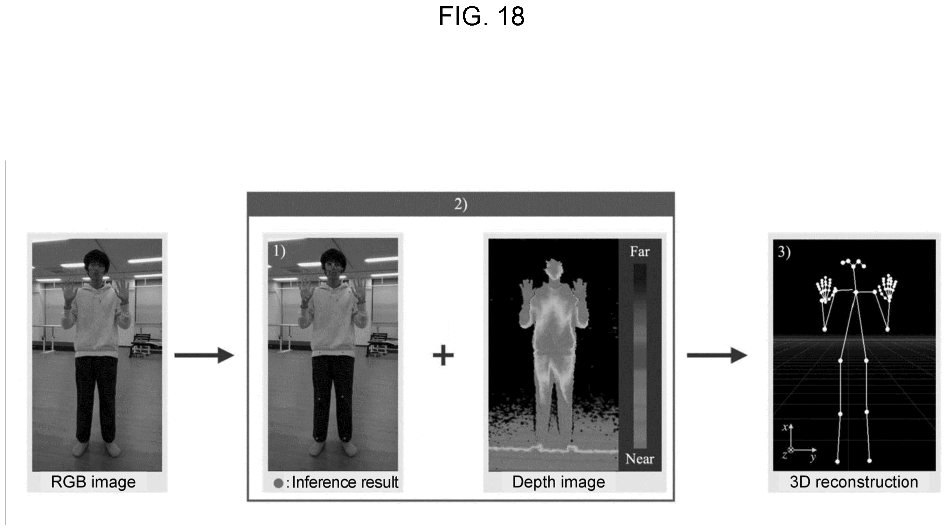

As a result, in the motion capture device 23, as shown in Figure 18, it becomes possible to acquire three-dimensional skeletal information while maintaining high robustness regardless of an imaging position by the RGB-D sensor 71, by clarifying a relationship between a position in a three-dimensional space and a position in a captured image for an entire body of the subject.

The behavior recognition unit 83 recognizes a behavior, which is a connection of a plurality of local actions, based on three-dimensional skeletal information sequentially acquired by the skeletal information acquisition unit 82 from a transition state of posture of the subject.

The behavior recognition unit 83 sequentially recognizes corresponding local actions from three-dimensional skeletal information sequentially acquired by the skeletal information acquisition unit 82 while referring to a handwashing action recognition model constructed by deep learning using action recognition patterns set for each local action as training data.

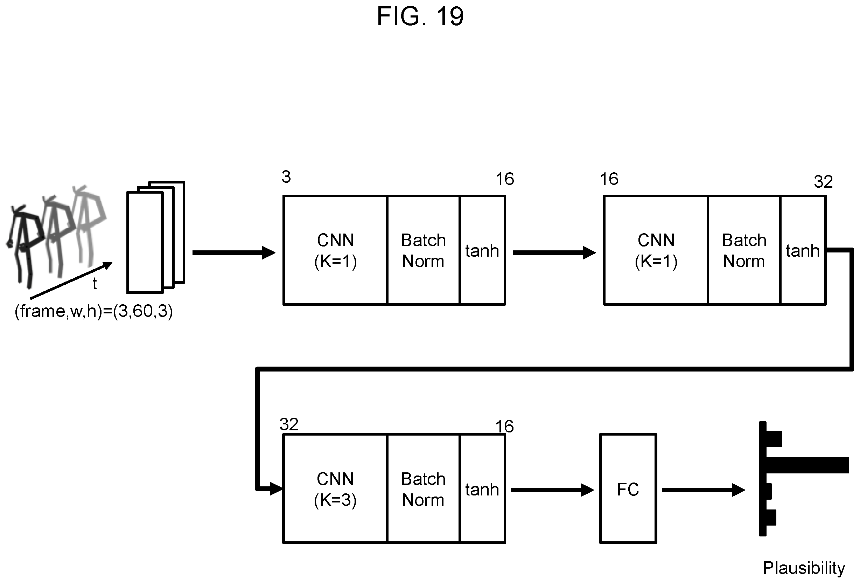

Specifically, in order to recognize a plurality of local actions, the behavior recognition unit 83 applies a behavior recognition model including three modules, namely a convolutional neural network (CNN) layer, a batch normalization layer (Batch Norm), and an activation function layer (tanh function), and a fully connected layer, as shown in Figure 19.

In the behavior recognition model, skeletal information of a current frame and a frame two frames prior thereto is input, thereby making it possible to obtain likelihoods for each of a plurality of types of local actions related to behavior.

Furthermore, as a recognition result, the behavior recognition unit 83 performs post-processing to determine, as a current local action, an action with the highest frequency among actions observed in 15 frames (a current frame and 14 preceding frames). In this manner, the behavior recognition unit 83 trained the behavior recognition model by supervised learning using an original dataset. For optimization, a cross-entropy loss function and Adam (Adaptive Moment Estimation) with a learning rate of 0.001 were used.

As a result, the motion capture device 23 can significantly improve recognition accuracy and recognition speed of local action based on three-dimensional skeletal information.

(2-8) Method of Detecting Environment Information

In the human and environment information input/output unit 10, the peripheral measurement device 24 includes a thermometer, a hygrometer, a barometer, and surrounding sound collectors for audible sound and ultrasonic sound, and acquires environment information of surroundings centered on the subject. This environment information mainly includes temperature, humidity, and surrounding sound in surroundings in which the subject is present.

(2-9) Gaze Detection Method

In the human and environment information input/output unit 10, the subject wears a head-mounted display (not shown) to experience, as audiovisual content, the subject's own human activities constructed in an information space by the virtual activity construction unit, and also to experience, as audiovisual content, output operations of the output apparatus 4 transcribed by an activity transcription unit described below.

The head-mounted display is provided with a monitor for allowing a subject who wears the head-mounted display to recognize video and a speaker for allowing the subject to recognize audio. It should be noted that the head-mounted display has a housing formed of a transparent light-transmissive material so that detection of facial expressions and facial surface temperature of the subject is not hindered during imaging by the facial imaging camera 21 or during non-contact detection by the vital sign measurement apparatus 20.

In addition, the head-mounted display is configured to capture an image of a space corresponding to a visual field of the subject and, while capturing the image, to recognize eye movements of the subject by image recognition in an imaging range to detect a gaze of the subject, and to detect a position of the gaze within an imaging range captured by a space imaging unit.

The configuration and method for this gaze detection are not particularly limited; however, in addition to an imaging-based method, a method using an infrared differential image and a gaze identification method using glasses-type sensors equipped with a half mirror may also be applied. For example, a method using an infrared differential image utilizes a fact that a strong reflection image is obtained from an eye when a light source is placed on a gaze line, and is a method in which two infrared rays having different wavelengths are irradiated onto an eye of a subject, a reflection image of an iris region is extracted from a difference between respective reflection images, and a gaze of the subject is identified from the reflection image.

(3) Method for Reflecting on Output Apparatus

(3-1) Reflection on Output Apparatus

In the space sharing system 1 of the present invention, when a subject is connected to an external output apparatus 4 via a cloud 3, the space sharing system 1 is configured such that the subject reflects, as much as possible, human activities in a real space that are virtually constructed in an information space in real time on the output apparatus 4 via a second interface device 5.

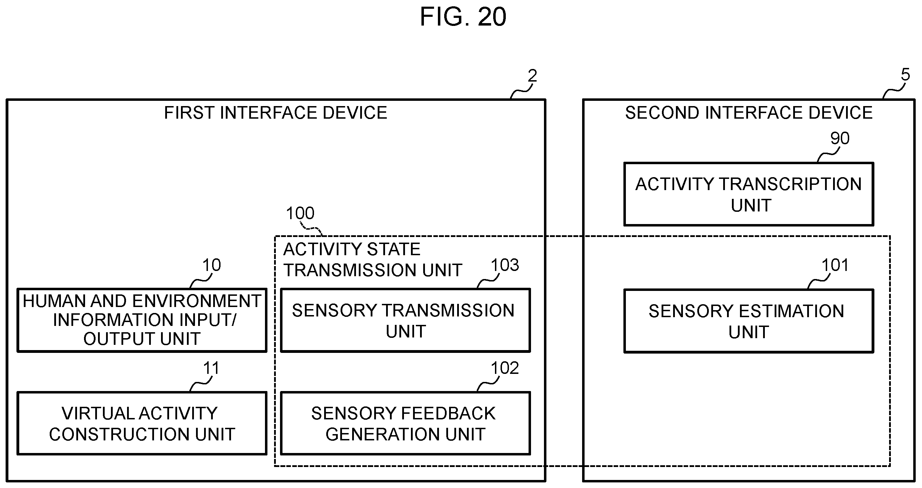

Figure 20 illustrates a configuration of the second interface device 5. The second interface device 5 includes an activity transcription unit 90 and a part of an activity state transmission unit 100 described later (a sensory estimation unit 101). Figure 20 also illustrates a configuration of the first interface device 2 including other parts of the activity state transmission unit 100 (a sensory feedback generation unit 102 and a sensory transmission unit 103).

The activity transcription unit 90, when receiving a request to connect with a subject from an external output apparatus 4, transcribes all or part of the subject's human activity constructed in an information space by a virtual activity construction unit 11 (Figure 2) in a first interface device 2, according to an output form of the output apparatus 4.

At that time, the activity transcription unit 90 determines, for all of the subject's human activity in the real space, consistency with and differences from operations executable by the output apparatus 4 based on an output form and functions of the output apparatus 4, and transcribes all or part of the subject's human activity to the output apparatus 4 within constraints and a range of output operations according to the determination result.

At the same time, the activity transcription unit 90 reflects human characteristic information specific to the subject generated by the information generation unit 12 in an output operation by the output apparatus 4.

In this way, in the space sharing system 1, when a subject is connected to an external output apparatus 4, all or part of the subject's human activity is transcribed according to an output form of the output apparatus 4, and human characteristic information specific to the subject is also reflected in an output operation by the output apparatus 4.

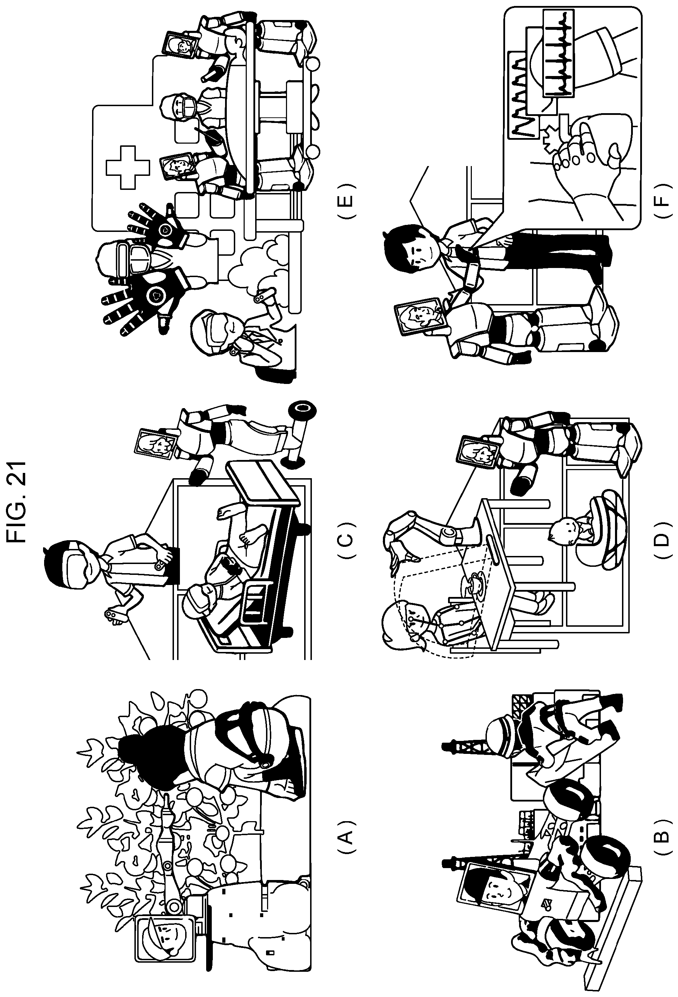

Figure 21(A) to Figure 21(F) illustrate specific examples relating to output forms of the output apparatus 4. As output forms of the output apparatus 4, support activities for humans and cooperative activities with humans are mainly assumed. Figure 21(A) and Figure 21(B) assume a case in which the output apparatus 4, as an avatar of the subject, performs work labor. For example, tomato harvesting work in the agricultural field (Figure 21(A)) and material transport work in the construction field (Figure 21(B)) are exemplified.

Figure 21(C) and Figure 21(D) assume a case in which the output apparatus 4, as an avatar of the subject, performs proxy actions at a remote site. For example, a visit action to a patient hospitalized in a hospital (Figure 21(C)) and a childcare action performed on behalf of a mother suffering from hemiplegia (Figure 21(D)) are exemplified.

Further, Figure 21(E) and Figure 21(F) assume a case in which remote medical care is performed using the output apparatus 4. For example, a case in which a subject who is a doctor performs surgery on a patient waiting in an operating room of a remote hospital (Figure 21(E)) and a case in which a subject who is a patient receives a diagnosis from a doctor at a remote hospital (Figure 21(F)) are exemplified.

(3-2) Feedback Method from Output Apparatus

As shown in Figure 20 described above, the activity state transmission unit 100 feeds back and transmits an operation state by the output apparatus 4 to the subject in the real space in real time via the information space. The activity state transmission unit 100 includes a sensory estimation unit 101 in the second interface device 5, and a sensory feedback generation unit 102 and a sensory transmission unit 103 in the first interface device 2.

The sensory estimation unit 101 estimates physical sensations and psychological sensations of a human based on an effect result relating to operation contents of the output apparatus 4 and a perception result of an environmental state in which the output apparatus 4 is present when the output apparatus 4 is in operation.

(3-2-1) Human Physical Sensation Estimation

The sensory estimation unit 101 is configured to detect tactile force sensation, which is an effect result of the output apparatus 4, among human physical sensations, and in particular, is configured to apply a tactile force sensing means capable of accurately measuring a magnitude of a load applied from outside regardless of an area on which the load acts.

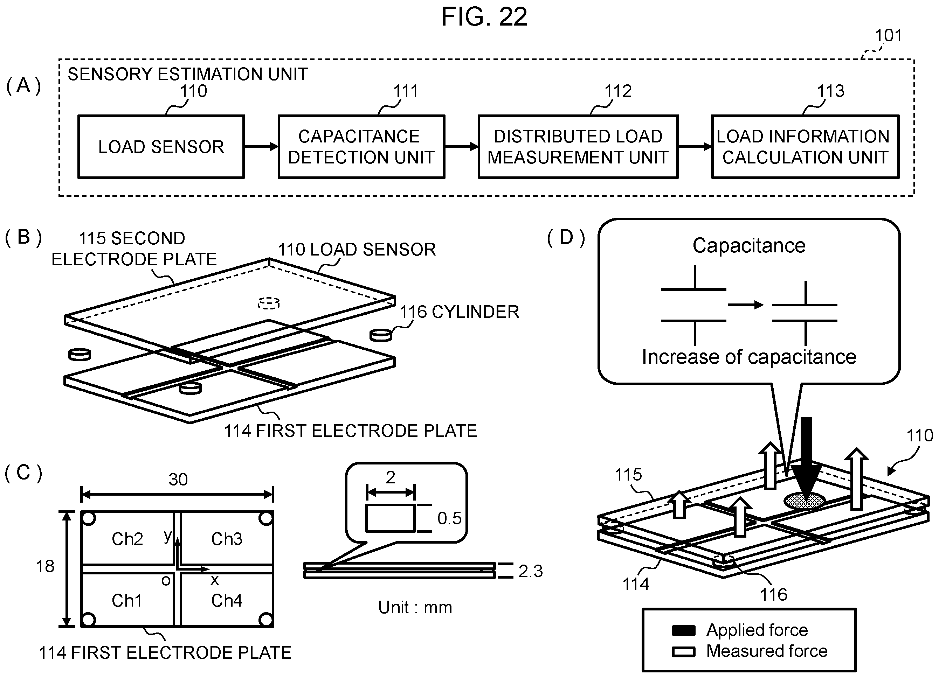

As the sensory estimation unit 101 serving as the tactile force sensing means, the sensory estimation unit 101 includes, as shown in Figure 22(A), a load sensor 110, a capacitance detection unit 111, a distributed load measurement unit 112, and a load information calculation unit 113.

As shown in Figure 22(B) to Figure 22(D), the load sensor 110 is of a capacitance type, and forms a plurality of capacitors by interposing, respectively, cylinders 116 of a predetermined shape made of viscoelastic bodies equal in number to the positive electrodes between a first electrode plate 114 in which a plurality of positive electrodes are arranged on the same plane in an array manner and a second electrode plate 115 in which a single negative electrode is arranged.

Specifically, the load sensor 110 is entirely covered using a shield member made of a non-conductive material. As a result, it is possible to prevent formation of a capacitor between the sensor itself and another dielectric in advance and to remove external noise. The capacitance detection unit 111 detects a capacitance of each capacitor that changes in accordance with an external force applied to the second electrode plate 115 of the load sensor 110.

Specifically, for each capacitor, the capacitance detection unit 111 performs calibration correction of a measurement error of a load applied to the corresponding cylinder 116 in accordance with material characteristics of the cylinder 116 and a response delay in accordance with hardness of the corresponding cylinder 116, based on an amount of increase in capacitance from when the load is applied until after a predetermined time has elapsed.

As a result, since the cylinder 116, which is a viscoelastic body, exhibits a response delay due to gradual viscous deformation occurring after instantaneous elastic deformation, the response delay increases in proportion to a decrease in hardness, and as the hardness decreases, an amount of expansion and contraction of the cylinder 116 with respect to a load increases and a distance between the electrode plates becomes smaller, whereby a capacitance that has an inversely proportional relationship with the distance between the electrode plates increases, so that an amount of increase in capacitance increases in proportion to the decrease in hardness; however, factors based on such material characteristics can be eliminated.

The distributed load measurement unit 112 measures a distributed load representing a distribution of loads applied to the respective cylinders 116, based on amounts of change in capacitance of the respective capacitors detected by the capacitance detection unit 111. The load information calculation unit 113 calculates a total load of an external force applied to the second electrode plate 115 of the load sensor 110 and a load center position, based on a relationship between an amount of expansion and contraction of each cylinder 116 with respect to the distributed load measured by the distributed load measurement unit 112 and a pattern of the distributed load.

Specifically, the load information calculation unit 113 calculates an error compensation amount for a non-uniform load in which a load center position is outside a center of the second electrode plate 115, based on a total load of an external force applied to the second electrode plate 115 of the load sensor 110, a ratio of a distributed load in an x-axis direction with the first electrode plate 114 as a plane, and a ratio of a distributed load in a y-axis direction with the first electrode plate 114 as a plane, and performs calibration correction of the load center position based on the error compensation amount.

As a result, even for a non-uniform load in which a load center position is outside a center of the second electrode plate 115, it becomes possible to calculate an error compensation amount by simulation and to perform calibration correction of the load center position simultaneously with correction of size errors of the respective first electrode plates 114.

In this manner, since the sensory estimation unit 101 uniquely determines a distributed load applied to each cylinder 116 in accordance with a total load of an external force applied to the second electrode plate 115 of the load sensor 110 and a load center position, it is possible to accurately measure a magnitude of a load applied from outside regardless of an area over which the load acts on the second electrode plate 115.

(3-2-2) Human Psychological Sensation Estimation

The sensory estimation unit 101 applies, as effect results related to operation content of the output apparatus 4, psychological state changes estimated based on daily communication of the subject and analyses thereof and narrative analysis, including keywords used in utterances, intonation at the time of utterance, loudness of voice, a configuration state of a narrative, continuity and discontinuity of communication, and differences from accumulated data thereof, and also applies, as sensing results of an environmental state in which the output apparatus is present, not only a surrounding environment of the output apparatus (temperature, humidity, atmospheric pressure, ambient sound, etc.) but also human information of the subject obtained by sensing technologies (heart rate, electrocardiogram, pulse, blood pressure, body temperature, skin blood flow distribution, skin temperature distribution, sweating, facial expressions (facial expression recognition), odor substances, etc.) by adding the same as reference targets.

Then, the sensory estimation unit 101 estimates a change in a human psychological state as a psychological sensation based on an effect result related to operation content of the output apparatus 4 and a sensing result of an environmental state in which the output apparatus is present. In this manner, the sensory estimation unit 101 can comprehensively estimate and grasp psychological information of a person based on both human information obtained by communication analysis and narrative analysis and human information obtained by sensing.

Subsequently, the sensory feedback generation unit 102 generates, as feedback information, psychological sensations estimated by the sensory estimation unit 101. The sensory transmission unit 103 transmits feedback information generated by the sensory feedback generation unit 102 to the subject in the real space.

As a result, the space sharing system 1 enables the subject to share human psychological sensations through the output apparatus 4 from interactions related to content of the subject's activities when operating with the output apparatus 4.

(4)Method for Generating an Autonomous Avatar

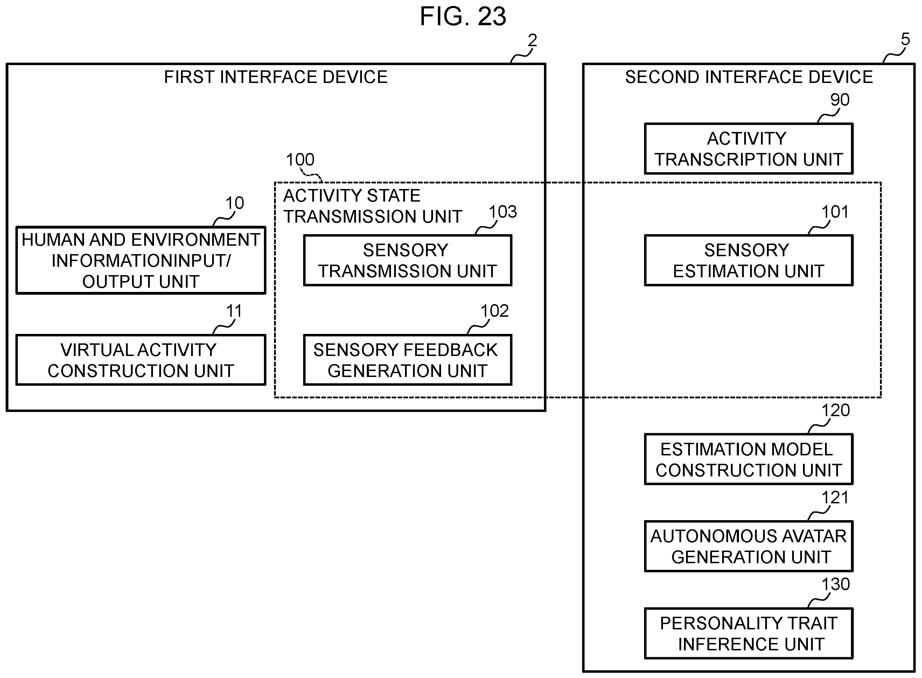

In addition to such a configuration, in the space sharing system 1 according to the present invention, when an alternative person different from the subject in the real space performs activities in place of the subject, as shown in Figure 23 in which the same reference numerals are assigned to corresponding parts to those in Figure 20, an estimation model construction unit 120 and an autonomous avatar generation unit 121 provided in the second interface device 5 are used to cause a presence similar to the subject to be represented as an autonomous avatar in the information space.

The estimation model construction unit 120 constructs an estimation model trained to estimate a function having a characteristic unique to the subject by statistically analyzing a correlation of the subject's human and environment information with an activity result of the subject transcribed to the output apparatus 4.

As a premise, the estimation model construction unit 120, when the subject executes a predetermined action task, divides the action task in a time-series manner into operation phase units according to correlations of activity states of the subject based on human and environment information. That is, an action task is executed along a time axis using, as unit criteria, basic operation phases (operation patterns having spatial information and temporal information) required for the subject to perform a predetermined action task.

As an action task, for example, in a case of performing caregiving work, operation phases include bathing assistance, meal assistance, toileting assistance, mobility assistance, bedtime assistance, and recreation, which are exemplified. Input assistance requires not only keeping a body of a care recipient clean but also operations such as improving metabolism and relaxing muscles. Meal assistance requires operations for supporting a care recipient so that the care recipient can eat safely and deliciously.

Toileting assistance requires constant attention because execution timing varies depending on a care recipient, and since both physical and psychological stress is felt, it is necessary to build a mutual relationship of trust. Mobility assistance requires operations for safely supporting movement actions such as getting up, standing up, walking, and sitting down. Bedtime assistance requires operations such as not only bed making and guiding to a bed but also responding when a care recipient wakes up during the night for reasons such as going to a toilet.

Subsequently, when the subject habitually executes an action task, the estimation model construction unit 120 reads, from the cloud 3, activity state data (and, as necessary, environmental data) corresponding to the action task for a plurality of times including at least the most recent ones, and performs cluster analysis based on similarity for each operation phase to aggregate them.

The estimation model construction unit 120 aggregates (clusters) operation phases having high similarity among a plurality of operation phases constituting an action task. Each operation phase has a plurality of parameters represented by multiple values such as attributes, gender, age, and skill level of the subject.

The estimation model construction unit 120 performs cluster analysis by a non-parametric Bayesian method using a Dirichlet process mixture distribution having these multi-valued parameters. It should be noted that, as the cluster analysis method, a method (k-means method) that classifies data into a plurality of groups based on similarity between data calculated by a preset objective function may be used.

The estimation model construction unit 120 calculates, as an evaluation function, a deviation of an activity state of the subject in each operation phase while comparing operation phases of different instances that have been aggregated. That is, the estimation model construction unit 120 prepares, for each of the aggregated operation phases, as a first evaluation function, a deviation between an operation pattern set as a reference and an operation pattern corresponding to each aggregated operation phase.

In addition, the estimation model construction unit 120 prepares, for each of the aggregated operation phases, as a second evaluation function, a deviation between a work time required for an operation pattern set as a reference and a work time required for an operation pattern corresponding to each aggregated operation phase.

Further, the estimation model construction unit 120 prepares, as a third evaluation function, physiological system information set as a reference for each aggregated operation phase, together with the above-described first and second evaluation functions. In order to evaluate appropriateness of the physiological system information, a third evaluation function is set using, as indicators, a state of nervous system activity such as sympathetic nerve activity derived from heart rate variability, and body temperature, blood pressure, heart sounds, and the like. It should be noted that the heart rate variability may be calculated not only from pulse wave fluctuations from a skin surface but also from heart activity obtained by pulse waves, electrocardiograms, ballistic waves accompanying cardiac output, microwaves, or the like.

Further, the estimation model construction unit 120 prepares, as a fourth evaluation function, environment information (room temperature, humidity, atmospheric pressure, noise, etc.) set as a reference for each aggregated operation phase, together with the above-described first and second evaluation functions.

The estimation model construction unit 120 estimates transitions of activity states of the subject for each operation phase in an action task based on the first to fourth evaluation functions, and evaluates reproducibility, efficiency, and an error rate of the action task of the subject.

In this manner, the estimation model construction unit 120 constructs an estimation model that has learned to estimate functions having characteristics unique to the subject by statistically analyzing a correlation of the subject's human and environment information with the subject's activity result transcribed to the output apparatus, based on evaluation results for the subject.

The autonomous avatar generation unit 121 generates an autonomous avatar capable of self-expression including a function of the subject in the information space, based on an estimation model estimated by the estimation model construction unit 120.

The virtual activity construction unit 11 virtually constructs human activity of a substitute for the subject in the real space while reflecting self-expression of the autonomous avatar in the information space. At the same time, the information generation unit 12 generates human characteristic information specific to the substitute while analyzing human activity of the substitute expressed as an autonomous avatar constructed in the information space by the virtual activity construction unit 11.

As a result, the space sharing system 1 can reflect, as an autonomous avatar, the same presence as the subject from the cloud 3 through the information space when a substitute different from the subject in the real space acts in place of the subject.

(5) Method for Enabling Virtual Presence after Death of a Subject

Further, in the space sharing system 1 according to the present invention, even when the subject in the real space has died, as shown in Figure 23, a personality trait inference unit 130 provided in the second interface device 5 is used to cause a presence similar to the subject to be represented as an autonomous avatar in the information space.

The personality trait inference unit 130 infers personality traits related to self-expression of the subject from an operation result by the output apparatus 4. The personality traits related to self-expression of the subject are features inferred as a personality of the subject while associating and accumulating, for each operation phase constituting operation content of the output apparatus 4, estimation results of human psychological sensations (changes in psychological state) by the above-described sensory estimation unit 101.

When acquisition of the subject's human and environment information by the human and environment information input/output unit 10 is stopped for a predetermined period of time, the virtual activity construction unit 11 reflects personality traits, which are results of inference by the personality trait inference unit 130, in self-expression of the autonomous avatar.

As a result, in the space sharing system 1, even when the subject in the real space has died, it becomes possible to reflect, as an autonomous avatar, the same presence as the subject from the cloud 3 through the information space.

(6) Other Embodiments

It should be noted that, as described above, in the present embodiment, a case has been described in which a configuration of the space sharing system 1 is constituted only by a one-to-one relationship between a first interface device 2 corresponding to a subject and a second interface device 5 corresponding to an output apparatus 4; however, the present invention is not limited thereto, and a plurality of first interface devices 2 corresponding to a plurality of subjects may be provided, and a plurality of second interface devices 5 corresponding to a plurality of types of output apparatuses 4 according to purposes may be provided.

Reference Signs List

1: space sharing system, 2: first interface device, 3: cloud, 4: output apparatus, 5: second interface device, 10: human and environment information input/output unit, 11: virtual activity construction unit, 12: information generation unit, 20: vital sign measurement apparatus, 21: facial imaging camera, 22: sound collection microphone, 23: motion capture device, 24: peripheral measurement device, 25: information detection unit, 30: electrode terminal group, 31: photoelectric probe window, 32: connection terminal, 40: brain activity measurement unit, 41: blood flow measurement unit, 42: electrocardiograph, 43: first control unit, 44: wireless communication device, 45: net-shaped base, 46A to 46N: sensor units, 47: light emission unit, 48: light reception unit, 50: biological signal measurement wearable device, 53: biological signal sensor, 54A to 54F: biological signal sensor group, 55: measurement module, 56: measurement module controller, 57: memory, 58: communication unit, 59: second control unit, 60: near-infrared detection unit, 61: far-infrared detection unit, 62: third control unit, 70: control unit, 71: RGB-D sensor, 72: IMU sensor, 73: fourth control unit, 74: data storage unit, 80: image coordinate setting unit, 81: coordinate group extraction unit, 82: skeletal information acquisition unit, 83: behavior recognition unit, 90: activity transcription unit, 100: activity state transmission unit, 101: sensory estimation unit, 102: sensory feedback generation unit, 103: sensory transmission unit, 110: load sensor, 111: capacitance detection unit, 112: distributed load measurement unit, 113: load information calculation unit, 114: first electrode plate, 115: second electrode plate, 116: cylinder, 120: estimation model construction unit, 121: autonomous avatar generation unit, 130: personality trait inference unit

**Claims**

1. A space sharing system comprising:

   a human and environment information input/output unit that acquires human and environment information including brain and nervous system information, muscular and skeletal system information, physiological information, psychological information, action information, behavior information, and environment information of a subject present in a real space;
   a virtual activity construction unit that virtually constructs human activity of the subject in the real space in an information space in real time based on the subject's human and environment information output from the human and environment information input/output unit; and
   an information generation unit that generates human characteristic information specific to the subject while analyzing human activities of the subject that are constructed in the information space by the virtual activity construction unit.

2. The space sharing system according to claim 1, further comprising:

   an activity transcription unit that, when receiving a request to connect with the subject from an external output apparatus, transcribes all or part of the subject's human activity constructed in the information space by the virtual activity construction unit according to an output form of the output apparatus,
   wherein the activity transcription unit reflects the human characteristic information specific to the subject generated by the information generation unit into an output operation by the output apparatus.

3. The space sharing system according to claim 2, further comprising:
   an activity state transmission unit that transmits a state of operation by the output apparatus to the subject in the real space in real time via the information space as feedback.

4. The space sharing system according to claim 3, wherein

   the activity state transmission unit includes
   a sensory estimation unit that estimates human physical sensations and psychological sensations, during operation of the output apparatus, based on an effect result related to an operation content of the output apparatus and a sensing result of an environmental state in which the output apparatus is present;
   a sensory feedback generation unit that generates the physical sensations and psychological sensations estimated by the sensory estimation unit as feedback information; and
   a sensory transmission unit that transmits the feedback information generated by the sensory feedback generation unit to the subject in the real space.

5. The space sharing system according to claim 1, further comprising:

   an estimation model construction unit that constructs an estimation model trained to estimate a function with a unique characteristic of the subject by statistically analyzing a correlation of the subject's human and environment information with the subject's activity result transcribed to the output apparatus; and
   an autonomous avatar generation unit that generates an autonomous avatar capable of self-expression including the function of the subject in the information space, based on the estimation model estimated by the estimation model construction unit, wherein
   the virtual activity construction unit virtually constructs human activity of a substitute for the subject in the real space, reflecting the self-expression of the autonomous avatar in the information space, and

# EP 4 765 003 A1

the information generation unit generates human characteristic information specific to the substitute while analyzing human activity of the substitute expressed as the autonomous avatar that is constructed in the information space by the virtual activity construction unit.

6. The space sharing system according to claim 3, further comprising:

a personality trait inference unit that infers a personality trait related to the subject's self-expression from a result of an operation by the output apparatus, wherein
when the acquisition of the subject's human and environment information by the human and environment information input/output unit is stopped for a predetermined period of time, the virtual activity construction unit reflects a personality trait that is a result of inference by the personality trait inference unit into the self-expression of the autonomous avatar.

7. A space sharing method, comprising:

a first step of acquiring human and environment information including brain and nervous system information, muscular and skeletal system information, physiological information, psychological information, action information, behavior information, and environment information of a subject present in a real space;
a second step of virtually constructing human activity of the subject in the real space in an information space in real time based on the subject's human and environment information acquired in the first step; and
a third step of generating human characteristic information specific to the subject while analyzing human activities of the subject that are constructed in the information space by the second step.

8. The space sharing method according to claim 7, comprising:

a fourth step of, when receiving a request to connect with the subject from an external output apparatus, transcribing all or part of the subject's human activity constructed in the information space by the second step according to an output form of the output apparatus,
wherein the fourth step reflects the human characteristic information specific to the subject generated by the third step into an output operation by the output apparatus.

9. The space sharing method according to claim 8, comprising:
a fifth step of transmitting a state of operation by the output apparatus to the subject in the real space in real time via the information space as feedback.

10. The space sharing method according to claim 9, wherein

the fifth step
estimates human physical sensations and psychological sensations, during operation of the output apparatus, based on an effect result related to an operation content of the output apparatus and a sensing result of an environmental state in which the output apparatus is present, generates the physical sensations and psychological sensations estimated as feedback information, and then transmits the feedback information to the subject in the real space.

11. The space sharing method according to claim 7, comprising:

a sixth step of constructing an estimation model trained to estimate a function with a unique characteristic of the subject by statistically analyzing a correlation of the subject's human and environment information with the subject's activity result transcribed to the output apparatus; and
a seventh step of generating an autonomous avatar capable of self-expression including the function of the subject in the information space, based on the estimation model estimated by the sixth step, wherein
the second step virtually constructs human activity of a substitute for the subject in the real space, reflecting the self-expression of the autonomous avatar in the information space, and
the third step generates human characteristic information specific to the substitute while analyzing human activity of the substitute expressed as the autonomous avatar that is constructed in the information space by the virtual activity construction unit.

12. The space sharing method according to claim 9, further comprising:

an eighth step of inferring a personality trait related to the subject's self-expression from a result of an operation by the output apparatus, wherein

when the acquisition of the subject's human and environment information by the human and environment information input/output unit is stopped for a predetermined period of time, the second step reflects a personality trait that is a result of inference by the personality trait inference unit into the self-expression of the autonomous avatar.

# FIG. 1

1 SPACE SHARING SYSTEM

## FIG. 2

**FIRST INTERFACE DEVICE** (2)

**HUMAN AND ENVIRONMENT INFORMATION INPUT/OUTPUT UNIT** (10)

- 20 VITAL SIGN MEASUREMENT APPARATUS
- 21 FACIAL IMAGING CAMERA
- 22 SOUND COLLECTION MICROPHONE
- 23 MOTION CAPTURE DEVICE
- 24 PERIPHERAL MEASUREMENT DEVICE
- 25 INFORMATION DETECTION UNIT

- 11 VIRTUAL ACTIVITY CONSTRUCTION UNIT
- 12 INFORMATION GENERATION UNIT

EP 4 765 003 A1

FIG. 3

FIG. 4

FIG. 5

( A )

( B )

FIG. 6

(A)

FIRST CONTROL UNIT 43

WIRELESS COMMUNICATION DEVICE 44

ELECTRO-CARDIOGRAPH 42

HEART

E

40
45
41
46A 46B 46C 46D 46N

(B)

LIGHT EMISSION UNIT 47

LIGHT RECEPTION UNIT 48

46A
46B
46C
46D

BP

BR
BR1
BR2
BR3
CP

# FIG. 7

(A)

(B)

EP 4 765 003 A1

# FIG. 8

BRAIN

SPINAL
CORD

# FIG. 9

VITAL SIGN MEASUREMENT APPARATUS 20

SUBJECT

NEAR-INFRARED DETECTION UNIT 60

FAR-INFRARED DETECTION UNIT 61

THIRD CONTROL UNIT 62

# FIG. 10

( A )

( B )

FIG. 11

( A )

( B )

## FIG. 12

HUMIDIFIED AND
DISINFECTED

HUMIDIFIED

NASAL
BREATHING

( A )

ORAL
BREATHING

( B )

## FIG. 13

EXHALED
AIR

35~36℃

( A )

INHALED
AIR

23~28℃

SKIN
TEMPERA-
TURE
30~33℃

( B )

# FIG. 14

( A )

( B )

# FIG. 15

( A )

NASAL TEMPERATURE

MOUTH OPENING AND CLOSING

ORAL TEMPERATURE

( B )

FIG. 16

EP 4 765 003 A1

# FIG. 17

23 MOTION CAPTURE DEVICE

70

CONTROL UNIT

73

FOURTH CONTROL UNIT

71

RGB-D
SENSOR

80

IMAGE COORDINATE
SETTING UNIT

81

COORDINATE GROUP
EXTRACTION UNIT

72

IMU SENSOR

82

SKELETAL INFORMATION
ACQUISITION UNIT

74

DATA
STORAGE
UNIT

83

BEHAVIOR
RECOGNITION UNIT

FIG. 18

# FIG. 19

(frame,w,h)=(3,60,3)

3 — CNN (K=1) | Batch Norm | tanh — 16

16 — CNN (K=1) | Batch Norm | tanh — 32

32 — CNN (K=3) | Batch Norm | tanh — 16 → FC →

Plausibility

EP 4 765 003 A1

## FIG. 20

FIRST INTERFACE DEVICE — 2

SECOND INTERFACE DEVICE — 5

HUMAN AND ENVIRONMENT INFORMATION INPUT/OUTPUT UNIT — 10

VIRTUAL ACTIVITY CONSTRUCTION UNIT — 11

ACTIVITY STATE TRANSMISSION UNIT — 100

SENSORY TRANSMISSION UNIT — 103

SENSORY FEEDBACK GENERATION UNIT — 102

ACTIVITY TRANSCRIPTION UNIT — 90

SENSORY ESTIMATION UNIT — 101

EP 4 765 003 A1

43

FIG. 21

(A)

(C)

(E)

(B)

(D)

(F)

EP 4 765 003 A1

# FIG. 22

(A) SENSORY ESTIMATION UNIT — 101

| LOAD SENSOR (110) | → | CAPACITANCE DETECTION UNIT (111) | → | DISTRIBUTED LOAD MEASUREMENT UNIT (112) | → | LOAD INFORMATION CALCULATION UNIT (113) |

(B)
115 SECOND ELECTRODE PLATE
110 LOAD SENSOR
116 CYLINDER
114 FIRST ELECTRODE PLATE

(C)
30
18
Ch2  y  Ch3
o    x
Ch1      Ch4
114 FIRST ELECTRODE PLATE

2
0.5
2.3
Unit : mm

(D)
Capacitance
Increase of capacitance

115
114
116
110

Applied force
Measured force

EP 4 765 003 A1

# FIG. 23

## INTERNATIONAL SEARCH REPORT

International application No.

**PCT/JP2024/021784**

| A. | CLASSIFICATION OF SUBJECT MATTER |
|---|---|

*G06Q 50/10*(2012.01)i; *G06F 3/01*(2006.01)i
FI:   G06Q50/10; G06F3/01 515; G06F3/01 570

According to International Patent Classification (IPC) or to both national classification and IPC

| B. | FIELDS SEARCHED |
|---|---|

Minimum documentation searched (classification system followed by classification symbols)

G06Q50/10; G06F3/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2017-521017 A (BLAST MOTION INC.) 27 July 2017 (2017-07-27)<br>entire text, all drawings | 1-12 |
| A | WO 2022/019545 A1 (SAMSUNG LIFE PUBLIC WELFARE FOUNDATION) 27 January 2022 (2022-01-27)<br>entire text, all drawings | 1-12 |
| A | WO 2021/090331 A1 (EMBRIGHT INFOTECH PRIVATE LIMITED) 14 May 2021 (2021-05-14)<br>entire text, all drawings | 1-12 |
| A | US 2022/0342481 A1 (COAPT LLC) 27 October 2022 (2022-10-27)<br>entire text, all drawings | 1-12 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/021784**

| Patent document cited in search report | | | Publication date (day/month/year) | Patent family member(s) | | | Publication date (day/month/year) |
|---|---|---|---|---|---|---|---|
| JP | 2017-521017 | A | 27 July 2017 | WO | 2015/164389 | A1 | |
| | | | | entire text, all drawings | | | |
| | | | | AU | 2015249884 | A1 | |
| | | | | CA | 2917542 | A | |
| | | | | CN | 106464848 | A | |
| | | | | EP | 3017598 | A1 | |
| WO | 2022/019545 | A1 | 27 January 2022 | US | 2022/0179480 | A1 | |
| | | | | entire text, all drawings | | | |
| | | | | JP | 2023-537255 | A | |
| | | | | EP | 4186554 | A1 | |
| | | | | KR | 10-2022-0012497 | A | |
| | | | | CN | 116133593 | A | |
| WO | 2021/090331 | A1 | 14 May 2021 | (Family: none) | | | |
| US | 2022/0342481 | A1 | 27 October 2022 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018049629 A
- JP 6933849 B
- JP 5283700 B
- JP 5409637 B

### Non-patent literature cited in the description

- A flexible new technique for camera calibration. *IEEE Transactions on Pattern Analysis and Machine Intelligence*, 2000, vol. 22 (11), 1330-1334